(19) **Europäisches Patentamt**
**European Patent Office**
**Office européen des brevets**

(11) **EP 3 885 137 B1**

(12) **EUROPEAN PATENT SPECIFICATION**

(45) Date of publication and mention
of the grant of the patent:
**13.12.2023 Bulletin 2023/50**

(21) Application number: **20165150.2**

(22) Date of filing: **24.03.2020**

(51) International Patent Classification (IPC):
**B32B 27/08** (2006.01)   **B32B 27/18** (2006.01)
**B32B 27/30** (2006.01)   **B32B 27/32** (2006.01)
**C08J 5/18** (2006.01)   **C08L 23/08** (2006.01)
**C08L 23/10** (2006.01)   **C08L 23/14** (2006.01)

(52) Cooperative Patent Classification (CPC):
**C08L 23/08; B32B 27/08; B32B 27/18;**
**B32B 27/30; B32B 27/32; B32B 27/327;**
**C08L 23/10; C08L 23/142;** B32B 2250/02;
B32B 2250/03; B32B 2250/24; B32B 2250/242;
B32B 2250/246; B32B 2264/00; B32B 2264/02;

(Cont.)

(54) **A MULTILAYER BLOWN FILM**

MEHRSCHICHTIGE BLASFOLIE

FILM SOUFFLÉ MULTICOUCHE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**29.09.2021 Bulletin 2021/39**

(73) Proprietor: **Borealis AG**
**1020 Vienna (AT)**

(72) Inventors:
• **WANG, Jingbo**
**4021 Linz (AT)**
• **GAHLEITNER, Markus**
**4021 Linz (AT)**
• **BERNREITNER, Klaus**
**4021 Linz (AT)**

• **LESKINEN, Pauli**
**06101 Porvoo (FI)**

(74) Representative: **Kador & Partner Part mbB**
**Corneliusstraße 15**
**80469 München (DE)**

(56) References cited:
EP-A1- 2 020 291       EP-B1- 2 415 598
EP-B1- 2 540 496       US-A- 5 709 937
US-B2- 10 328 678

(52) Cooperative Patent Classification (CPC): (Cont.)
B32B 2264/10; B32B 2270/00; B32B 2307/31;
B32B 2307/40; B32B 2307/412; B32B 2307/536;
B32B 2307/544; B32B 2307/546; B32B 2307/558;
B32B 2307/732; B32B 2439/70

**Description**

The present invention is directed to a multilayer blown film comprising at least two layers, i.e. one sealing layer (SL), said one sealing layer (SL) comprising a metallocene catalyzed linear low density polyethylene (mLLDPE), and at least one base layer (BL) or core layer (CL), said base layer (BL) or core layer (CL) containing a metallocene catalyzed bimodal propylene 1-butene copolymer ($mC_3C_4$).

High standards are nowadays required for packaging materials. Quite often properties are required in the packaging industry, which are conflicting. Typically, high stiffness and toughness as well as excellent sealing behavior and good optics are required in parallel. To achieve these different properties seldom pure components, but rather combinations of different polymer components are used. Two different approaches mainly are at the skilled person's disposal: (a) blends of two or more polymers to form a heterophasic structure, or (b) producing a multilayer structure with different materials providing different functions. Both of them are applied in industry, the latter being even more popular since the choice of materials is more diverse without the need to consider the demanding technical questions of complex polymer blends. With multilayer structures known in the art already multilayer films with good properties for the packaging industry are achieved. One of the classic examples is the combination of two polyethylene layers, one being a sealing layer based on a linear low density polyethylene (LLDPE) with density about 0.918 $g/cm^3$ and another being the core layer based on a medium density polyethylene (MDPE) or a linear low density polyethylene (LLDPE) with higher density which improves the mechanics. Such kind of combination has the weakness that an acceptable stiffness/toughness balance is reached at the expense of the optical properties due to the polyethylene with higher density.

Of course, also polypropylenes, especially polypropylene containing higher $\alpha$-olefins, like 1-hexene, are used in film making for packaging systems. Such polypropylenes show already good sealing properties and thus are typically used as a sealing layer in multilayer films. The overall performance of such multilayer films especially in view of the sealing behavior is, however, inferior compared to polyethylene multilayer systems.

Several kinds of multilayer films, combining layers of polypropylene (PP) and different types of polyethylene (PE) are already known for numerous applications as outlined for example in Borealis' sales brochure "Polypropylene Blown Film" FF BROCH 121 GB 2010 08 BB.

Also numerous patents describing multilayer film constructions are known.

For Example, EP 2540496 discloses a multi-layer blown polymer film comprising (a) a core layer (CL) being selected from the group consisting of polyvinyl alcohols, polyacrylates, polyamides, poly(ethylene terephthalate), polyolefins (PO) and mixtures thereof, and (b) a sealing layer (SL) comprising a propylene copolymer composition (P), said propylene copolymer composition (P) (c1) has a comonomer content in the range of 3.0 to 8.0 wt%, the comonomers are C5 to C12 $\alpha$-olefins, (c2) comprises a polypropylene (A) and a propylene copolymer (B) in the weight ratio [(A)/(B)] of 20/80 to 80/20, wherein said polypropylene (A) is a propylene homopolymer (H-A) or a propylene copolymer (C-A) having a comonomer content of below 4.0 wt%, the comonomers are C5 to C12 $\alpha$-olefins, and said propylene copolymer (B) has a comonomer content of 4.0 to 20.0 wt%, the comonomers are C5 to C12 $\alpha$-olefins, and (c3) fulfills the ratio MFR A / MFR P $\leq$ 1.0.

Thus, EP 2540496 discloses multilayer films wherein the sealing layer is PP-based, while the core layer is a different polymer than the PP of the sealing layer.

These structures have according to the Examples a sealing initiation temperature (SIT) of at least 107°C, which is still considered as too high for numerous purposes.

Another Example is EP 2994309, which claims a multi-layered polymer film, comprising a sealing layer and a base layer, wherein the sealing layer comprises a polypropylene (SL-PP) comprising comonomer units derived from ethylene in an amount of from 0.5 wt% to 25 wt%, and from at least one C5-12 alpha-olefin in an amount of from 0.5 mol% to 4.0 mol%, having XCS $\geq$ 20 wt%, and the xylene solubles have an amount of ethylene-derived comonomer units of from 4 to 50 wt%, complying with the relation C 2 XS $\times$ XS/100 / C 2 total $\geq$ 0.90 and with the relation: C 5 - 12 XS $\times$ XS/100 / C 5 - 12 total $\leq$ 0.30. Also here, focus is on the sealing layer based on specific PP copolymers.

These structures have according to the Examples a sealing initiation temperature (SIT) of at least 88 °C, but mainly above 100 °C. The high content of extractables (XCS) however limits the applicability of these constructions.

In WO 2007085283 A1 three-layer (BAB) blown films are described, having a PP homo or PP homo-random polymer as the core layer material, and a PP random or a LLDPE/LDPE blend as skin layer material. The invention aims at higher film stiffness or improved optics, such films being suitable for the manufacture of labels. No sealing and impact properties are disclosed.

Although a lot of development work has already been done in the field of multilayer blown films, there is still the need for improved multilayer blown films showing, excellent sealing properties, i.e. low sealing initiation temperature combined with good optical performance and an improved stiffness/impact balance.

Accordingly, the object of the present invention is to provide a multilayer blown film, especially an unoriented multilayer blown film, having excellent sealing properties paired with good optical performance and an improved stiffness/impact balance, especially having high tensile modulus and a high dart drop impact.

The finding of the present invention is to provide a multilayer blown film having a polyethylene based thin sealing layer and a base layer based on a metallocene catalyzed bimodal propylene 1-butene random copolymer.

Accordingly, the invention is directed to a multilayer blown film comprising at least two layers, one sealing layer (SL) and one base layer (BL), wherein

(a) the sealing layer (SL) comprises

(i) at least 90.0 wt% up to 100.0 wt%, based on the total weight of the sealing layer (SL), of a first polymer composition (PC1), said first polymer composition comprises at least 70.0 wt% up to 100.0 wt%, based on the total weight of the first polymer composition (PC1), of a metallocene catalyzed linear low density polyethylene (mLLDPE), said metallocene catalyzed linear low density polyethylene (mLLDPE) having a density in the range of 890 to 930 kg/m$^3$ and 0.0 up to 30.0 wt%, based on the total weight of first polymer composition (PC1), of a further polyethylene polymer selected from the group of low density polyethylenes (LDPE) having long-chain branched (LCB) structure.

(ii) and 0.0 up to 10.0 wt%, based on the total weight of the sealing layer (SL), of additives (AD) selected from the group consisting of antioxidants, light stabilizers, acid scavengers, processing aids, anti-blocking aids, nucleating agents, slip agents and mixtures thereof, and

(b) the base layer (BL) comprises

(iii) at least 90.0 wt% up to 100.0 wt%, based on the total weight of the base layer (BL), of a metallocene catalyzed bimodal propylene 1-butene random copolymer

(iv) and 0.0 up to 10.0 wt%, based on the total weight of the base layer (BL), of additives (AD) selected from the group consisting of antioxidants, light stabilizers, acid scavengers, processing aids, anti-blocking aids, nucleating agents, slip agents and mixtures thereof.

In one further embodiment the multilayer blown film comprising in addition to the one sealing layer (SL) and the one base layer (BL) at least one further layer, said one further layer being an outer layer (OL), whereby

(c) the outer (OL) comprises

(v) at least 90.0 wt% up to 100.0 wt%, based on the total weight of the outer (OL), of a 2nd polymer composition (PC2), said 2nd polymer composition (PC2) comprises at least 90.0 wt% up to 100.0 wt%, based on the total weight of the 2nd polymer composition (PC2), of a polyethylene homo- or copolymer.

(vi) and 0.0 up to 10 wt%, based on the total weight of the outer layer (OL), of additives (AD) selected from the group consisting of antioxidants, light stabilizers, acid scavengers, processing aids, anti-blocking aids, nucleating agents, slip agents and mixtures thereof.

In case that the multilayer blown film comprises in addition one outer layer (OL), the stacking order of the at least three layers is (SL)/(BL)/(OL), whereby the base layer (BL) can also be called core layer (CL).

Further preferred embodiments are defined in the dependent claims.

In the following, the invention will be described in more detail.

The term "polymer composition (PC)", like "1st polymer composition (PC1)" or"2nd polymer composition (PC2)", indicates that said composition contains just polymers, preferably just polyolefins. Accordingly, the term "polymer composition" excludes for instance the presence of additives in said compositions. However said polymer compositions may of course contain typical impurities, like for instance catalyst impurities resulting from the polymerization process. Such impurities are regarded part of the polymer and will not exceed 2.0 wt% based on the total weight of the polymer composition.

**The multilayer film**

The present invention is directed to a multilayer blown film comprising at least two layers, i.e. one sealing layer (SL1) and one base layer (BL).

In addition, the multilayer blown film can comprise at least one further layer, the at least one further layer being an outer layer (OL).

If such an outer layer (OL) is present, the stacking order of the at least three layers is sealing layer/base or core layer/outer layer, (SL)/(BL)/(OL), whereby the base layer (BL) can also be called core layer (CL).

The multilayer blown film may comprise further layers, for instance between the sealing layer (SL) and the core layer (CL) and/or between the core layer (CL) and the outer layer (OL). Accordingly, the total number of layers may be

EP 3 885 137 B1

up to 9, like 8, 7, 6, 5 or 4 layers. However, it is preferred that the multilayer film consists of 5 layers, more preferably of 2 or 3 layers. Thus in one preferred embodiment the multilayer blown film consists of one sealing layer (SL) and one base layer (BL), whereas in another preferred embodiment the multilayer blown film consists of one sealing layer (SL), one core layer (CL) and one outer layer (OL).

In the latter case, the sealing layer (SL1) and the outer layer (OL) are the outermost layers, i.e. the surface layers of the multilayer blown film.

Preferably, the multilayer blown film has a total thickness in the range of 20 to 300 $\mu$m, more preferably in the range of 25 to 250 $\mu$m, still more preferably in the range of 30 to 200 $\mu$m, more preferably in the range of 35 to 150 $\mu$m, like in the range of 35 to 100 $\mu$m or 40 to 75 $\mu$m.

Preferably, the multilayer blown film is an unstretched film. The term "unstretched" shall indicated, that the multilayer blown film is not dimensionally stretched as this is the case for biaxially oriented films. Accordingly, it is preferred that the multilayer blown film according to this invention is not biaxially stretched or uniaxially stretched. "Stretching" is a processing step, which stretches the film more than a film is stretched due to normal drawing effects caused by film making. For instance, a film in a cast film line is drawn and thus slightly stretched in machine direction. A similar effect occurs in a blown film line where the bubble is drawn. Such drawing effects, however, are not understood as stretching. Stretching is more than the drawing occurring in the cast film line or blown film line. Accordingly, the inventive multilayer blown film is non-stretched. Since the multilayer blown film is produced on a blown film line, the cooling of the multilayer blown film can be effected by water cooling or air cooling, the latter being preferred.

The preparation of a multilayer blown film is state of the art and not part of the invention. For instance a multilayer blown film is obtained by a blown film coextrusion process. In the blown film coextrusion process the melts of the polymer materials for the base layer (BL), respectively core layer (CL), for the sealing layer (SL), for the optional outer layer (OL) and optionally for all further layers are extruded through an annular die and blown into a tubular film by forming a bubble which is collapsed between nip rollers after solidification. The blown coextrusion can be preferably effected at a temperature in the range 160 to 240°C, and cooled by water or preferably by blowing gas (generally air) at a temperature of 10 to 50°C to provide a frost line height of 0.5 to 8 times the diameter of the die. The blow up ratio should generally be in the range of from 1.5 to 4.0, such as from 2.0 to 4.0, preferably 2.5 to 3.5.

Optionally one or both, surface(s) of the multilayer blown film can be corona- or flame-treated by one of the known methods. For the corona treatment, the film is passed between two conductor elements serving as electrodes, with such a high voltage, usually an alternating voltage (about 10000 V and 10000 Hz), being applied between the electrodes that spray or corona discharges can occur. Due to the spray or corona discharge, the air above the film surface is ionized and reacts with the molecules of the film surface, causing formation of polar inclusions in the essentially non-polar polymer matrix. The treatment intensities are in the usual range, preferably from 38 to 48 dynes/cm after production.

The tensile modulus determined according to ISO 527 at 23°C on multilayer blown film with a thickness of 50 $\mu$m in machine direction as well as in transverse direction is preferably in the range of from 400 to 1200 MPa, preferably of from 500 to 1000 MPa, and more preferably of from 600 to 800 MPa.

Multilayer blown films of the invention have a sealing initiation temperature (SIT) (determined on 50 $\mu$m multilayer blown film as described in the experimental part) of 100°C or less, such as 95°C or less, more preferably 90°C or less. Whilst the SIT is ideally as low as possible, typical lower limits might be 55°C, or 60 or 62°C.

Preferably, the multilayer blown film therefore have a sealing initiation temperature (SIT) in the range of from 55°C to 100°C, more preferably in the range of from 60°C to 95°C, and even more preferably in the range of from 62°C to 90°C.

The multilayer blown films can furthermore have a haze (determined according to ASTM D 1003-00 on 50 $\mu$m multilayer blown film) of below 10.0%, preferably of below 8.0%, and more preferably of below 5.0 %.

Thus, the haze of the multilayer blown films is preferably in the range of from 0.5 to below 10.0%, more preferably in the range of from 1.0 to below 8.0%, and even more preferably in the range of from 1.5 to below 5.0 %.

In addition, the multilayer blown films may have a clarity (determined according to ASTM D1003-00 on blown films with a thickness of 50 $\mu$m) of at least 95.0% up to 100.0%, preferably of at least 98.0% up to 100.0% and even more preferably of at least 99.0% up to 100.0%.

Additionally, it is preferred that the multilayer blown films have a dart-drop impact strength (DDI) determined according to ASTM D1709, method A on a 50 $\mu$m multilayer blown film of at least 150 g up to 550 g, more preferably in the range of 200 to 500 g, and still more preferably in the range of 250 to 450 g, like in the range of 290 to 400 g.

Viewed from another aspect, it is a constant need to provide films, which not only show improvements in one or two of these mechanical or optical properties. So it is desired to provide products with a well-balanced and continuously improved overall performance. Such an improvement in the overall performance of a blown film can be expressed by the optomechanical ability.

In view of the present invention optomechanical abilty (OMA) is understood as the ratio of mechanical (especially dart-drop impact strength (DDI) and tensile (MD)) behaviour, to optical performance, namely haze, wherein the mechanical properties are targeted to be as high as possible and the optical performance in the sense of haze is desired to be as low as possible. The optomechanical ability can be determined by multiplying Tensile Modulus (MD) and dart-drop impact strength (DDI; determined according to ASTM D1709, method A on a 50 $\mu$m multilayer blown film) and putting this product in relation to haze determined on 50 $\mu$m blown film.

The optomechanical ability (OMA) is therefore determined according the formula given below:

$$OMA = \frac{Tensile\ Modulus\ (MD)[MPa] * DDI(g)}{Haze\ (50\ \mu m)[\%]}$$

Thus in one further embodiment of the present invention, the optomechanical ability (OMA) of films determined on 50 $\mu$m multilayer blown film is at least 30000 [MPa*g/%] up to 90000 [MPa*g/%], preferably in the range of from 40000 [MPa*g/%] up to 80000 [MPa*g/%].

It will be appreciated that any parameter mentioned above is measured according to the detailed test given below. In any parameter where a narrower and broader embodiment are disclosed, those embodiments are disclosed in connection with the narrower and broader embodiments of other parameters.

The layers of the inventive multilayer blown film are described in detail below:

**Base layer (BL) respectively Core layer (CL)**

As defined above the multilayer blown film of this invention must comprise one base layer (BL) respectively core layer (CL), which contributes especially to the mechanical and optical properties.

The term "core layer (CL)" is understood herein as used in the technical field of packaging, i.e. the term "core layer (CL)" indicates that this layer forms the middle part of an at least 3-layered blown film.

The terms "base layer" respectively "core layer (CL)" further indicate that this layer is typically the thickest layer in the multilayer blown film.

According it is preferred that the thickness of the base layer (BL) respectively core layer (CL) is preferably in the range of 10 to 250 $\mu$m, more preferably in the range of 15 to 200 $\mu$m, yet more preferably in the range of 20 to 100 $\mu$m.

Further, although the phrase "base layer" or "core layer" is singular, it may refer to one or more layers, like to 2 to 5 layers, i.e. 2, 3, 4, or 5 layers, that form the base layer (BL) respectively core layer (CL) of the multilayer film. However, each of the layers forming together the "base layer" respectively "core layer" are chemically identical, i.e. have been produced with the same material. Thus for this reason the base layer (BL) respectively core layer (CL) is singular although in some embodiments the base layer (BL) respectively core layer (CL) may comprise several layers all of them produced with the identical material, i.e. the material defined in more detail below.

The base layer (BL) respectively core layer (CL) comprises at least 90.0 wt%, based on the total weight of the base layer (BL) respectively core layer (CL), of a metallocene catalyzed bimodal propylene 1-butene random copolymer (PBC). Preferably, the base layer (BL) respectively core layer (CL) contains the metallocene catalyzed bimodal propylene 1-butene random copolymer (PBC) as the only polymer. Accordingly, it is preferred that the base layer (BL) respectively core layer (CL) comprises at least 90.0 wt%, more preferably at least 95.0 wt%, yet more preferably at least 98.0 wt%, based on the total weight of the base layer (BL) respectively core layer (CL), of the metallocene catalyzed bimodal propylene 1-butene random copolymer (PBC) and

the remaining part up to 100 wt%, based on the total weight of the base layer (BL) respectively core layer (CL), are additives (AD).

Typical additives (AD) present in the base layer (BL) respectively core layer (CL) are antioxidants, light stabilizers, acid scavengers, processing aids, anti-blocking aids, nucleating agents and slip agents or mixtures thereof. Such additives are known in the art, see for instance Hans Zweifel at all "Plastics Additives Handbook", 6th edition, and do not contribute to the invention. *metallocene catalyzed bimodal propylene 1-butene random copolymer (PBC)*

As used herein, the term "propylene 1-butene copolymer" encompasses polymers being polymerized from propylene, and 1-butene monomer units. Therefore, the propylene 1-butene copolymer consists of propylene and 1-butene monomer units. The propylene 1-butene copolymer is understood to be substantially free of ethylene derived monomer units, e.g. comprises less than 0.1 wt% ethylene, preferably less than 0.01 wt% ethylene, more preferably less than 0.001 wt% of ethylene comonomer.

The propylene 1-butene copolymer of the present invention comprises - based on the total weight of the propylene 1-butene copolymer 85.0 to 98.0 wt%, preferably 87.0 to 97.0 wt% and more preferably 88.5 to 96.5 wt% of propylene and 2.0 - 15.0 wt% of 1-butene.

Preferably, the amount of 1-butene is in the range of 3.0 to 13.0 wt%, more preferably in the range of 3.5 to 11.5 wt%, like in the range of 4.0 to 11.0 wt%.

The $MFR_2$ (230°C/2.16kg, ISO 1133) of the propylene 1-butene copolymer is in the range of from 0.5 to below 4.0 g/10 min.

The MFR$_2$ of the propylene 1-butene copolymer is preferably in the range of 0.7 to 3.8 g/10 min, more preferably in the range of from 0.8 to 3.5 g/10 min and even more preferably in the range of from 0.9 to 3.0 g/10 min.

Furthermore, the amount of solubles of the propylene 1-butene copolymer shall be rather low. Accordingly, the amount of xylene cold solubles fraction determined at 25°C according ISO 16152; 2005 of the copolymers shall be in the range of from 0.10 to 2.80 wt%, preferably of from 0.20 to 2.50 wt%, more preferably of from 0.30 to 2.20 wt%, even more preferably of from 0.40 to 2.00 wt% and most preferably of from 0.50 to 1.90 wt%.

Xylene cold solubles are the part of the polymer soluble in cold xylene determined by dissolution in boiling xylene and letting the insoluble part crystallize from the cooling solution. The xylene solubles fraction contains polymer chains of low stereo-regularity and is an indication for the amount of non-crystalline areas.

The propylene 1-butene copolymer has a molecular weight distribution Mw/Mn, being the ratio of the weight average molecular weight Mw and the number average molecular weight Mn, of 2.0 to less than 4.5, preferably in the range of 2.0 to 4.2, like in the range of 2.5 to 4.0.

According to an embodiment of the present invention, the propylene 1-butene copolymer has an amount of hexane hot solubles (C6 FDA) measured on a 100 $\mu$m thick blown film according to FDA 177.1520 in the range of from 0.1 to less than 2.0 wt%, preferably in the range of from 0.2 to 1.7 wt%, more preferably in the range of from 0.3 to 1.5 wt% and even more preferably in the range of from 0.4 to 1.4 wt%.

According to a further embodiment of the present invention, the propylene 1-butene copolymer preferably has a flexural modulus determined according to ISO 178 in the range of from 700 to 1800 MPa, more preferably in the range of from 750 to 1600 MPa, and even more preferably in the range of from 800 to 1400 MPa.

Alternatively or in addition, the propylene 1-butene copolymer preferably has a Charpy notched impact strength at 23°C, determined according to ISO 179 1eA, in the range of from 2.0 kJ/m$^2$ to 10.0 kJ/m$^2$, preferably from 2.5 to 9.0 kJ/m$^2$ and more preferably from 3.0 to 7.0 kJ/m$^2$ and/or a haze measured according to ASTM D1033 on a 1.0 mm thick plaque in the range of from 5.0 to below 70.0%, preferably from 7.5 to 60.0% and more preferably from 10.0 to 55.0%.

The propylene 1-butene copolymer is preferably bimodal in view of the comonomer content and/or the MFR$_2$ and consists of polymer fractions (A) and (B).

Thus, the propylene 1-butene copolymer comprises:

30.0 to 70.0 wt% of a propylene 1-butene copolymer (A) having an MFR$_2$ of 0.5 to 20.0 g/10 min and a 1-butene content of 2.0 to 10.0 wt%; and
70.0 to 30.0 wt% of a propylene 1-butene copolymer (B) having an MFR$_2$ of 0.5 to 20.0 g/10 min and a 1-butene content of 3.5 to 20.0 wt%;
wherein copolymers (A) and (B) are different and the amount of (A) and (B) sums up to 100.0%.

(i) *Propylene 1-butene copolymer (A)*

Fraction (A) is a propylene 1-butene copolymer component. Typically, fraction (A) consists of a single propylene 1-butene copolymer.

The 1-butene content in copolymer (A) is in the range 2.0 to 10.0 wt% relative to the total weight of the copolymer (A), preferably 3.0 to 9.0 wt%, more preferably 4.0 to 8.0 wt%.

The propylene 1-butene copolymer (A) of the invention has a melt flow rate (MFR$_2$) of 0.5 to 20.0 g/10 min. Typically, the propylene 1-butene copolymer (A) has an MFR$_2$ of 15.0 g/10 min or less, preferably 12.0 g/10 min or less, preferably 10.0 g/10min or less. The polymer preferably has a minimum MFR$_2$ of 1.0 g/10min, such as greater than 1.5 g/10 min. Thus, particularly suitable values of MFR$_2$ are from 1.0 to 15.0 g/10 min, such as 2.0 to 10.0 g/10 min.

The propylene 1-butene copolymer fraction (A) is present in an amount of 30.0 to 70.0 wt%, preferably 35.0 to 65.0 wt%, more preferably 37.0 to 60.0 wt%.

(ii) *Propylene 1-butene copolymer (B)*

Fraction (B) is also a propylene 1-butene copolymer component. The 1-butene content in copolymer (B) is in the range 3.5 to 20.0 wt% relative to the total weight of the copolymer (A), preferably 3.7 to 18.0 wt%, more preferably 3.8 to 16.0 wt%.

The propylene 1-butene copolymer (B) of the invention has a melt flow rate (MFR$_2$) of 0.5 to 20.0 g/10 min. Typically, the propylene 1-butene copolymer (B) has an MFR$_2$ of 15.0 g/10 min or less, preferably 12.0 g/10 min or less, more preferably 10.0 g/10min or less, such as 8.0 g/10min or less. Thus, particularly suitable values of MFR$_2$ are from 0.5 to 10.0 g/10 min, such as 0.5 to 8.0 g/10 min.

The propylene 1-butene copolymer fraction (B) is present in an amount of 70.0 to 30.0 wt%, preferably 65.0 to 35.0 wt%, more preferably 63.0 to 40.0 wt%.

The propylene 1-butene copolymer being a bimodal copolymer comprising fractions (A) and (B), as described above, exhibits a double melting peak (Tm1 and Tm2) in differential scanning calorimetry.

Tm1 of the propylene 1-butene copolymer is preferably in the range of 125 to 155°C, more preferably in the range of 130 to 150°C, and even more preferably in the range of 135 to 145°C, whereas Tm2 of the propylene 1-butene copolymer is preferably in the range of 100 to 140°C, more preferably in the range of 105 to 138°C and even more preferably in the range of 107 to 135°C.

In order to facilitate processing, especially film processing, it is also desirable that the propylene 1-butene random copolymer has a suitable crystallization temperature even in absence of any nucleating agents. Preferably, the propylene 1-butene random copolymer has a crystallization temperature Tc as determined by DSC (differential scanning calorimetry) according to ISO 11357 in the range of 85°C to 115°C, more preferably in the range of 90°C to 112°C, like in the range of 95°C to 111°C.

It is also preferred that the difference between melting temperature Tm1 and crystallization temperature Tc, (Tm1 - Tc), is rather low. Said difference (Tm1 - Tc) shall preferably be less than 45°C, more preferably in the range of from 25°C to 42°C, like in the range of from 28°C to 40°C.

In addition, it is preferred that the propylene 1-butene copolymer as defined above is produced in the presence of a metallocene catalyst as described in detail in PCT/EP2019/081330 or PCT/EP2019/081323.

The propylene 1-butene random copolymer as described above may be prepared by any known process in the art.

The propylene 1-butene copolymer is preferably prepared by polymerizing propylene and butene by a sequential polymerization process comprising at least two reactors connected in series in the presence of a metallocene catalyst.

In case that the propylene 1-butene copolymer is a bimodal copolymer comprising fractions (A) and (B), as described above, propylene butene copolymer is preferably produced in a multistage process wherein fractions (A) and (B) are produced in subsequent stages.

The preparation of the multimodal, preferably bimodal propylene 1-butene copolymer is described in detail in PCT/EP2019/081330 or PCT/EP2019/081323.

Multimodal propylene 1-butene copolymer produced in a multistage process are also designated as "in-situ" blends. The resulting end product consists of an intimate mixture of the polymers from the two or more reactors. These two polymers may have different molecular-weight-distribution curves, and/or they may differ in terms of comonomer content or type. The end product thus contains a mixture or two or more polymers with differing properties, i.e. it is a multimodal polymer mixture.

**The sealing layer (SL)**

As mentioned above the multilayer film of this invention must comprise one sealing layer (SL). The term "sealing layer" is understood herein as used in the technical field of packaging, i.e. the term "sealing layer" indicates that said layer can be used for sealing purposes, i.e. on the surface of this layer or part of this layer the sealing can take place.

Hence it is preferred that the sealing layer (SL) forms the outermost layer of the multilayer blown film, thus forms one of the two surfaces of the multilayer blown film. Still more preferably the sealing layer (SL) is attached, i.e. joined, to the base layer (BL) respectively core layer (CL) of the multilayer blown film. Yet more preferably, the sealing layer (SL) forms one of the outermost layers of a three-layer blown film and is attached to the core layer (CL) of the three-layer blown film.

Preferably, the sealing layer (SL) has a thickness which is substantially less than the thickness of the base layer (BL) respectively core layer (CL) and substantially less than the thickness of the total multilayer blown film. Accordingly, it is appreciated, that the sealing layer (SL) has a thickness in the range of 0.5 to 50 $\mu$m, more preferably in the range of 1.0 to 30 $\mu$m and even more preferably in the range of 5 to 20 $\mu$m.

The sealing layer (SL) comprises at least 90.0 wt%, based on the total weight of the sealing layer (SL), of a 1st polymer composition (PC1). Preferably, the sealing layer (SL1) contains the 1st polymer composition (PC1) as the only polymer component. Accordingly, it is preferred that the sealing layer (SL) comprises at least 90.0 wt%, more preferably at least 95.0 wt%, yet more preferably at least 98.0 wt%, based on the total weight of the sealing layer (SL), of the 1st polymer composition (PC1) and the remaining part up to 100.0 wt%, based on the total weight of the sealing layer (SL), are additives (AD). Typical additives (AD) present in the sealing layer (SL) are antioxidants, light stabilizers, acid scavengers, processing aids, anti-blocking aids, nucleating agents and slip agents or mixtures thereof. Such additives are known in the art, see for instance Hans Zweifel at all "Plastics Additives Handbook", 6th edition, and do not contribute to the invention.

Concerning the definition the 1st polymer composition (PC1) it is referred to the information below.

*1st polymer composition (PC1)*

As mentioned above, the term "1st polymer composition (PC1)" indicates that said composition contains just polyethylenes. One of the polymers must be the metallocene catalyzed linear low density polyethylene (mLLDPE) as defined in more detail below. Accordingly, it is preferred, that 1st polymer composition (PC1) comprises at least 70.0 wt% up to 100 .0 wt%, more preferably at least 75.0 wt% up to 100 .0 wt%, still more preferably at least 80.0 wt% up to 100 .0 wt% and even more preferably at least 85.0 wt% up to 100 .0 wt%, based on the total weight of the 1st polymer composition (PC1), of the metallocene catalyzed linear low density polyethylene (mLLDPE) and the remaining part up to 100 .0 wt%, based on the total weight of the 1st polymer composition (PC1), are further polyethylenes, like a low density polyethylene (LDPE) having a long-chain branched (LCB) structure as defined in detail below.

Accordingly, in one preferred embodiment the 1st polymer composition (PC1) consists of the metallocene catalyzed linear low density polyethylene (mLLDPE).

In another specific preferred embodiment the 1st polymer composition (PC1) consists of the metallocene catalyzed linear low density polyethylene (mLLDPE) and a low density polyethylene (LDPE).

In such a case it is preferred that the 1st polymer composition (PC1) consists of

(a) 70.0 to 98.0 wt%, preferably 75.0 to 95.0 wt%, still more preferably 80.0 to 92.0 wt%, based on the total weight of the1st polymer composition (PC1), of the metallocene catalyzed linear low density polyethylene (mLLDPE), and

(b) 2.0 to 30.0 wt%, preferably 5.0 to 25.0 wt%, still more preferably 8.0 to 20.0 wt%, based on the total weight of the 1st polymer composition (PC1), of a low density polyethylene (LDPE).

The metallocene catalyzed linear low density polyethylene (mLLDPE) has a density in the range of 890 to 930 kg/cm$^3$, more preferably in the range of 900 to 925 kg/m$^3$, yet more preferably in the range of 910 to 923 kg/m$^3$, still more preferably has a density in the range of 912 to 920 kg/m$^3$.

The metallocene catalyzed linear low density polyethylene (mLLDPE) contains at least one comonomer, preferably only one or two comonomer(s), the latter being especially preferred. That comonomer(s) is/are preferably $C_3$ to $C_{10}$ $\alpha$-olefin comonomer(s). Therefore, the use of copolymers with just one comonomer or terpolymers, i.e. copolymers of ethylene with two further comonomers, is particularly preferred. Said terpolymer is one specific preferred linear low density polyethylene (mLLDPE). Hence, the metallocene catalyzed linear low density polyethylene (mLLDPE) contains preferably just one or two type(s) of $C_3$ to $C_{10}$ $\alpha$-olefin comonomer(s). Still more preferably, the comonomer(s) is/are selected from the group consisting of 1-butene, 1-hexene, 1-octene and mixtures thereof. In one preferred embodiment, the comonomer employed is 1-octene. In another preferred embodiment the metallocene catalyzed linear low density polyethylene (mLLDPE) is a terpolymer consisting of ethylene, 1-butene and 1-hexene.

The total amount of $\alpha$-olefin comonomer(s) present in the metallocene catalyzed linear low density polyethylene (mLLDPE) can range from 1.0 to 10.0 mol%, preferably from 1.5 to 5.0 mol%, and even more preferably from 2.0 to 4.5 mol%.

In case the metallocene catalyzed linear low density polyethylene (mLLDPE) is a terpolymer consisting of ethylene, 1-butene and 1-hexene it is preferred that the 1-butene content is in the range of from 0.05 to 1.0 mol%, more preferably in the range of from 0.10 to 0.6 mol% and even more preferably in the range of from 0.15 to 0.5 mol% and the 1-hexene content in the range of 2.0 to 5.0 mol%, more preferably in the range of from 2.4 to 4.5 mol% and even more preferably of from 2.6 to 4.0 mol%.

Further it is preferred that the metallocene catalyzed linear low density polyethylene (mLLDPE) has a melt flow rate $MFR_2$ (190 °C, 2.16 kg) in the range of 0.5 to 8.0 g/10min, more preferably in the range of 0.8 to 4.0 g/10min, and even more preferably in the range of from 1.0 to 3.5 g/10 min.

The metallocene catalyzed linear low density polyethylene (mLLDPE) may preferably be multimodal, like bimodal ortrimodal, i.e. its molecular weight profile does not comprise a single peak but instead comprises the combination of two or three peaks (which may or may not be distinguishable) centred about different average molecular weights as a result of the fact that the polymer comprises two separately produced components.

Multimodal polyethylenes are typically made in more than one reactor each having different conditions. The components are typically so different that they show more than one peak or shoulder in the diagram usually given as result of its GPC (gel permeation chromatograph) curve, where d(log(MW)) is plotted as ordinate vs log(MW), where MW is molecular weight.

The Mw/Mn of the bimodal or trimodal mLLDPE may be in the range of from 2.0 to 7.0, preferably in the range of from 2.5 to 6.5 and more preferably in the range of from 3.0 to 6.0.

Bimodal metallocene catalyzed linear low density polyethylene (mLLDPE) is known in the art and not subject of the invention. Reference is made in this regard for Example to EP 3 257 895 A1, example IE1 of EP 3 257 895 A1 or PCT/EP2019/086918, e.g. the 2nd second bimodal terpolymer or WO 2019/081611, Example 3.

They can be produced with a 2-stage or 3-stage process, preferably comprising at least one slurry reactor (loop reactor), whereby the slurry loop reactor is connected in series with a gas phase reactor (GPR), so that the ethylene polymer leaving the slurry reactor is fed to the GPR to produce bimodal mLLDPE. Alternatively, the process comprises 2 slurry reactors (loop reactors) and one gas phase reactor connected in series, whereby for the 2 slurry reactors reaction conditions are chosen in a way that in both slurry reactors the same product is produced (same MFR and density).

A suitable process is the Borstar PE process.

Bimodal polyethylene terpolymers preferably comprise at least

(i) as a lower molecular weight (LMW) component an ethylene polymer component (A) having an $MFR_2$ of 1.0 to 10.0 g/10 min (according to ISO 1133 at 190°C under 2.16 kg load) and

(ii) as a higher molecular weight (HMW) component an ethylene polymer component (B) having an $MFR_2$ of 0.2 to 0.9 g/10 min (according to ISO 1133 at 190°C under 2.16 kg load),

and whereby the density of ethylene polymer component (A) is higher than the density of the ethylene polymer component (B); the density of the ethylene polymer component (A) being in the range of 930 to 950 kg/m$^3$.

In a preferred embodiment for such terpolymers, the LMW component can be an ethylene homopolymer, whereas the HMW is a terpolymer, especially an ethylene, 1-butene, 1-hexene terpolymer.

In another preferred embodiment, the LMW component as well as the HMW component can be an ethylene copolymer, whereby in case of terpolymers it is especially preferred that the LMW component is an ethylene 1-butene copolymer and the HMW component is an ethylene 1-hexene copolymer.

An example for such a metallocene catalyzed linear low density polyethylene (mLLDPE) is Anteo™ FK1820, which is a bimodal ethylene/1-butene/1-hexene terpolymer with a density of 918 kg/m$^3$ and an $MFR_2$ of 1.5 g/10min commercially available from Borouge.

Trimodal metallocene catalyzed linear low density polyethylene (mLLDPE) can be produced with a 3-stage process, preferably comprising a first slurry reactor (loop reactor 1), whereby the first slurry loop reactor is connected in series with another slurry reactor (loop reactor 2), so that a first ethylene polymer component produced in the loop reactor 1 is fed to the loop reactor 2. The loop reactor 2 is thereby connected in series to a gas phase reactor (GPR), so that the ethylene polymer leaving the second slurry reactor is fed to the GPR to produce trimodal mLLDPE. In this case the reaction conditions in the two slurry reactors are chosen in a way that in the two slurry reactors different product in view of MFR and density are produced.

A suitable process is the Borstar PE 3G process.

Trimodal polyethylene terpolymers preferably comprise at least

(i) between 10 to < 25 wt% of an ethylene polymer component (A) having an $MFR_2$ of 0.1 to 10.0 g/10 min (according to ISO 1133 at 190°C under 2.16 kg load) and

(ii) between 10 to < 25 wt% of an ethylene polymer component (B) having an $MFR_2$ of 2.0 to 150.0 g/10 min (according to ISO 1133 at 190°C under 2.16 kg load) and

(iii) > 50 to 80 wt% of an ethylene polymer component (C) having an $MFR_2$ of 0.1 to 5.0 g/10 min (according to ISO 1133 at 190°C under 2.16 kg load) and

wherein the densities of ethylene polymer components (A) and (B) are each between 925 and 970 kg/m$^3$ and the density of ethylene polymer component (C) is between 880 and 920 kg/m$^3$.

Preferably, ethylene polymer components (A) and (B) are ethylene 1-butene copolymers, whereas ethylene polymer component (C) is either an ethylene 1-hexene copolymer or and ethylene, 1-butene, 1-hexene terpolymer.

In case that the 1$^{st}$ polymer composition (PC1) consists of the metallocene catalyzed linear low density polyethylene (mLLDPE) and a low density polyethylene (LDPE) having long-chain branched (LCB) structures, the low density polyethylene (LDPE) is preferably coming from a high-pressure polymerization process.

The low density polyethylene (LDPE) preferably has a density in the range of 910 to 940 kg/m$^3$, more preferably in the range of 915 to 935 kg/m$^3$, still more preferably in the range of 918 to 930 kg/m$^3$.

Further it is preferred that the low density polyethylene (LDPE) has a melt flow rate $MFR_2$ (190°C, 2.16 kg) in the range of from 0.05 to 2.0 g/10min, more preferably in the range of from 0.10 to 1.8 g/10min, and even more preferably in the range of from 0.15 to 1.5 g/10 min. The low density polyethylene (LDPE) is known in the art and not subject of the invention. Accordingly, one example of such a low density polyethylene (LDPE) is the commercial product FT5230 of Borealis AG ( $MFR_2$: 0.75g/10min; Density: 923kg/m$^3$ .

In case the 1$^{st}$ polymer composition (PC1) comprises in addition to the metallocene catalyzed linear low density polyethylene (mLLDPE) other polymers, like the low density polyethylene (LDPE), the 1$^{st}$ polymer composition (PC1) is obtained by typical (melt) blending as known in the art.

**The outer (OL)**

As mentioned above the multilayer blown film comprises in an embodiment of the invention at least one additional layer, said additional layer being an outer layer (OL). The outer layer (OL) can have any function in the multilayer film according to this invention. However it is preferred that the outer layer is either a heat shield layer (HSL) or the 2nd sealing layer (SL2), the latter being especially preferred.

Preferably, the outer layer (OL) is an outermost layer.

In case that the multilayer blown film comprises such an outer layer (OL), the stacking order of the at least three layers is (SL)/(BL)/(OL), whereby the base layer (BL) can also be called core layer (CL).

Preferably, the outer layer (OL) has a thickness that is substantially less than the thickness of the core layer (CL) and substantially less than the thickness of the total multilayer film. Accordingly, it is appreciated that the outer layer (OL) has a thickness in the range of 0.5 to 50 $\mu$m, more preferably in the range of 1.0 to 30 $\mu$m and even more preferably in the range of 5 to 20 $\mu$m.

In one embodiment, the sealing layer (SL) and the outer layer (OL) are of the same thickness, in another embodiment the total thickness of the sealing layer (SL) together with the outer layer (OL) is the same as the thickness of the core layer (CL).

The outer layer (OL) comprises at least 90.0 wt%, based on the total weight of the outer layer (OL), of a 2nd polymer composition (PC2). Preferably, the outer layer (OL) contains the 2nd polymer composition (PC2) as the only polymer component. Accordingly, it is preferred that the outer layer (OL) comprises at least 90.0 wt%, more preferably at least 95.0 wt%, yet more preferably at least 98.0 wt%, based on the total weight of the outer layer (OL), of the 2nd polymer composition (PC2) and the remaining part up to 100 .0 wt%, based on the total weight of the outer layer (OL), are additives (AD). Typical additives (AD) present in the outer layer (OL) are antioxidants, light stabilizers, acid scavengers, processing aids, anti-blocking aids, nucleating agents and slip agents. Such additives are known in the art, see for instance Hans Zweifel at all "Plastics Additives Handbook", 6th edition, and do not contribute to the invention.

Concerning the definition the 2nd polymer composition (PC2) it is referred to the information below.

*2nd polymer composition (PC2)*

As mentioned above the term "2nd polymer composition (PC2)" indicates that said composition contains just polyolefins, like polyethylenes or polypropylenes.

In case the outer layer (OL) is a heat shield layer (HSL), the 2nd polymer composition (PC2) is preferably the 2nd polymer composition (PC2B) and in case the outer layer (OL) is the 2nd sealing layer (SL2), the 2nd polymer composition (PC2) is preferably the 2nd polymer composition (PC2A) as defined in detail below.

In case the outer layer (OL) is a heat shield layer (HSL), said heat shield layer (HSL) is based on a 2nd polymer composition (PC2B). Preferably said 2nd polymer composition (PC2B) comprises at least 90.0 wt%, still more preferably at least 95.0 wt%, yet more preferably at least 98.0 wt%, based on the total weight of the 2nd polymer composition (PC2B), of a polypropylene being either

(a) a propylene homopolymer (H-PP) having a melting temperature of at least 158°C;
or
(b) a propylene copolymer (R-PP) having

(i) a melting temperature of at least 150°C and
(ii) a comonomer content, preferably ethylene content, of not more than 3.5 wt%.

Preferably, the polypropylene is a propylene homopolymer (H-PP).

Further, it is preferred that the propylene homopolymer (H-PP) or propylene copolymer (R-PP) has a melt flow rate MFR2 (230°C, 2.16 kg) in the range of 0.5 to 20.0 g/10min, more preferably in the range of 0.5 to 10.0 g/10min.

In case the outer layer (OL) is a 2nd sealing layer (SL2), said 2nd sealing layer (SL2) is based on a 2nd polymer composition (PC2A).

The term "2nd polymer composition (PC2A)" indicates that said composition contains just polymers, preferably just polyolefins, still more preferably just polyethylenes. Accordingly it is preferred that 2nd polymer composition (PC2A) comprises at least 70.0 wt%, more preferably at least 75.0 wt%, still more preferably at least 80.0 wt%, based on the total weight of the 2nd polymer composition (PC2A), of a 2nd linear low density polyethylene (LLDPE2) and the remaining part up to 100.0 wt%, based on the total weight of the 2nd polymer composition (PC2A), are polymers, preferably polyolefins, more preferably polyethylenes, like a 2nd low density polyethylene having long-chain branched (LCB) structure..

In a preferred embodiment the polyethylene (LLDPE2) is a metallocene catalyzed linear low density polyethylene (mLLDPE) as defined in more detail above for the sealing layer (SL).

Accordingly, it is preferred, that the 2nd polymer composition (PC2) comprises at least 70.0 wt% up to 100 .0 wt%, more preferably at least 75.0 wt% up to 100.0 wt%, still more preferably at least 80.0 wt% up to 100 .0 wt% and even more preferably at least 85.0 wt% up to 100 .0 wt%, based on the total weight of the 2nd polymer composition (PC2), of the metallocene catalyzed linear low density polyethylene (mLLDPE) and the remaining part up to 100 .0 wt%, based on the total weight of the 2nd polymer composition (PC2), are further polyethylenes, like a low density polyethylene (LDPE) as defined in detail above for the sealing layer (SL). Accordingly, in one preferred embodiment the 2nd polymer composition (PC2) consists of the metallocene catalyzed linear low density polyethylene (mLLDPE) as described above for the sealing layer (SL).

In another specific preferred embodiment the 2nd polymer composition (PC2) consists of the metallocene catalyzed linear low density polyethylene (mLLDPE) and a low density polyethylene (LDPE) as described above for the sealing layer (SL).

The 1st and the 2nd polymer compositions (PC1 and PC2) may be different from each other, or the 2nd polymer composition (PC2) may be identical to the 1st polymer composition (PC1).

The metallocene catalyzed linear low density polyethylene (mLLDPE) in the outer layer (OL) may be different from the metallocene catalyzed linear low density polyethylene (mLLDPE) of the sealing layer (SL), e.g. in comonomer content, $MFR_2$, etc., or may be the same in the outer layer (OL) and the sealing layer (SL).

In case a low density polyethylene (LDPE) is part of the 2nd polymer composition (PC2), the low density polyethylene (LDPE) in the outer layer (OL) may be different from the low density polyethylene (LDPE) of the sealing layer (SL), e.g. density, $MFR_2$, etc., or may be the same in the outer layer (OL) and the sealing layer (SL).

Preferably, the 2nd polymer composition (PC2) is identical to the 1st polymer composition (PC1) as defined above.

Furthermore, the present invention is also directed to the use of the inventive multilayer blown film, as packaging material, in particular as a packaging material for food and/or medical products.

In addition, the present invention is related to articles comprising a blown film as defined herein.

In the following the present invention is further illustrated by means of examples.

## EXAMPLES

### 1. Definitions/Measuring Methods

The following definitions of terms and determination methods apply for the above general description of the invention as well as to the below examples unless otherwise defined.

### Melt flow rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230°C and a load of 2.16 kg. The $MFR_2$ of polyethylene is determined at a temperature of 190°C and a load of 2.16 kg.

*Calculation of comonomer content of the second polymer fraction (B) of the propylene 1-butene copolymer:*

$$\frac{C(CP) - w(A)x\ C(A)}{w(B)} = C(B) \quad (I)$$

wherein

w(A) is the weight fraction [in wt%] of the first polymer fraction (A),
w(B) is the weight fraction [in wt%] of second polymer fraction (B),
C(A) is the comonomer content [in wt%] of the first polymer fraction (A),
C(CP) is the comonomer content [in wt%] of the C3C4 random copolymer,
C(B) is the calculated comonomer content [in wt%] of the second polymer fraction (B).

*Calculation of melt flow rate MFR2 (230 °C) of the polymer fraction (B) of the propylene 1-butene copolymer:*

$$MFR(B) = 10^{\left[\frac{\log(MFR(CP)) - w(A)\, x\, \log(MFR(A))}{w(B)}\right]} \quad (II)$$

wherein

w(A)    is the weight fraction [in wt%] of the polymer fraction A
w(B)    is the weight fraction [in wt%] of the polymer fraction B,
MFR(A)    is the melt flow rate MFR2 (230 °C) [g/10min] of the polymer fraction A,
MFR(CP)    is the melt flow rate MFR2 (230 °C) [g/10min] of the C3C4 random copolymer,
MFR(B)    is the calculated melt flow rate MFR2 (230 °C) [g/10min] of the polymer fraction B.

**Quantification of microstructure of the propylene 1-butene copolymer by NMR spectroscopy**

Quantitative nuclear-magnetic resonance (NMR) spectroscopy was used to quantify the comonomer content of the polymers.

Quantitative $^{13}C\{^{1}H\}$ NMR spectra recorded in the molten-state using a Bruker Avance III 500 NMR spectrometer operating at 500.13 and 125.76 MHz for $^{1}H$ and $^{13}C$ respectively. All spectra were recorded using a 13C optimised 7 mm magic-angle spinning (MAS) probe head at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09} Standard single-pulse excitation was employed utilising the NOE at short recycle delays {klimke06, pollard04} and the RS-HEPT decoupling scheme. {fillip05, griffin07} A total of 1024 (1k) transients were acquired per spectra using a 3 s recycle delay.

Quantitative $^{13}C\{^{1}H\}$ NMR spectra were processed, integrated and relevant quantitative properties determined from the integrals. All chemical shifts are internally referenced to the methyl isotactic pentad (mmmm) at 21.85 ppm {randall89}.

Basic comonomer content method spectral analysis method:
Characteristic signals corresponding to the incorporation of 1-butene were observed {randall89} and the comonomer content quantified in the following way.

The amount of 1-butene incorporated in PPBPP isolated sequences was quantified using the integral of the $\alpha$B2 sites at 43.6 ppm accounting for the number of reporting sites per comonomer:

$$B = I_\alpha / 2$$

The amount of 1-butene incorporated in PPBBPP double consecutively sequences was quantified using the integral of the $\alpha\alpha$B2B2 site at 40.5 ppm accounting for the number of reporting sites per comonomer:

$$BB = 2 * I_{\alpha\alpha}$$

When double consecutive incorporation was observed the amount of 1-butene incorporated in PPBPP isolated sequences needed to be compensated due to the overlap of the signals $\alpha$B2 and $\alpha$B2B2 at 43.9 ppm:

$$B = (I_\alpha - 2 * I_{\alpha\alpha}) / 2$$

The total 1-butene content was calculated based on the sum of isolated and consecutively incorporated 1-butene:

$$B_{total} = B + BB$$

The amount of propene was quantified based on the main $S\alpha\alpha$ methylene sites at 46.7 ppm and compensating for the relative amount of $\alpha B2$ and $\alpha B2B2$ methylene unit of propene not accounted for (note B and BB count number of butene monomers per sequence not the number of sequences):

$$P_{total} = IS_{\alpha\alpha} + B + BB / 2$$

The total mole fraction of 1-butene in the polymer was then calculated as:

$$f_B = B_{total} / ( B_{total} + P_{total})$$

The full integral equation for the mole fraction of 1-butene in the polymer was:

$$f_B = (((I_\alpha - 2 * I_{\alpha\alpha}) / 2) + (2 * I_{\alpha\alpha})) / (IS_{\alpha\alpha} + ((I\alpha - 2 * I_{\alpha\alpha}) / 2) + ((2 * I_{\alpha\alpha}) /2))$$
$$+ ((I_\alpha - 2 * I_{\alpha\alpha}) / 2) + (2 * I_{\alpha\alpha}))$$

This simplifies to:

$$f_B = (I_\alpha/2 + I_{\alpha\alpha}) / (IS_{\alpha\alpha} + I_\alpha + I_{\alpha\alpha})$$

The total incorporation of 1-butene in mole percent was calculated from the mole fraction in the usual manner:

$$B [mol\%] = 100 * f_B$$

The total incorporation of 1-butene in weight percent was calculated from the mole fraction in the standard manner:

$$B [wt\%] = 100 * (f_B * 56.11) / ((f_B * 56.11) + ((1 - f_B) * 42.08))$$

Details of these procedures can be found in Katja Klimke, Matthew Parkinson, Christian Piel, Walter Kaminsky Hans Wolfgang Spiess, Manfred Wilhelm, Macromol. Chem. Phys. 2006, 207, 382; Matthew Parkinson, Katja Klimke, Hans Wolfgang Spiess, Manfred Wilhelm, Macromol. Chem. Phys. 2007, 208, 2128; Patrice Castignolles, Robert Graf, Matthew Parkinson, Manfred Wilhelm, Marianne Gaborieau:, Polymer 2009, 50, 2373; M. Pollard, K. Klimke, R. Graf, H. W. Spiess, M. Wilhelm, O. Sperber, C. Piel, W. Kaminsky, Macromolecules 2004, 37, 813; Xenia Filip, Carmen Tripon, Claudiu Filip, J. Magn. Reson. 2005, 176, 239; John M. Griffin, Carmen Tripon, Ago Samoson, Claudiu Filip, Steven P. Brown, Mag. Res. in Chem. 2007, 45(S1), S198; J. Randall Rev. Macromol. Chem. Phys. 1989, C29, 201.

**Mw, Mn, MWD**

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N}(A_i/M_i)} \quad (1)$$

$$M_w = \frac{\sum_{i=1}^{N}(A_i x\, M_i)}{\sum_{i=1}^{N} A_i} \quad (2)$$

$$M_z = \frac{\sum_{i=1}^{N}(A_i \ x \ M_i^2)}{\sum_{i=1}^{N}(A_i/M_i)} \ (3)$$

For a constant elution volume interval ΔVi, where Ai, and Mi are the chromatographic peak slice area and polyolefin molecular weight (MW), respectively associated with the elution volume, Vi, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 × Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

KPS = 19 x 10-3 mL/g, αPS = 0.655

KPE = 39 x 10-3 mL/g, αPE = 0.725

KPP = 19 x 10-3 mL/g, αPP = 0.725

A third order polynomial fit was used to fit the calibration data.

All samples were prepared in the concentration range of 0,5 -1 mg/ml and dissolved at 160 °C for 2.5 hours for PP or 3 hours for PE under continuous gentle shaking.

**Comonomer content of 1-butene and 1-hexene of the linear low density polyethylene (mLLDPE)**

Quantitative $^{13}$C{$^1$H} NMR spectra recorded in the molten-state using a Bruker Avance III 500 NMR spectrometer operating at 500.13 and 125.76 MHz for $^1$H and $^{13}$C respectively. All spectra were recorded using a $^{13}$C optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules 2004;37:813., Klimke, K., Parkinson, M., Piel, C., Kaminsky, W., Spiess, H.W., Wilhelm, M., Macromol. Chem. Phys. 2006; 207:382.) and the RS-HEPT decoupling scheme (Filip, X., Tripon, C., Filip, C., J. Mag. Resn. 2005, 176, 239, Griffin, J.M., Tripon, C., Samoson, A., Filip, C., and Brown, S.P., Mag. Res. in Chem. 2007 45, S1, S198). A total of 1024 (1k) transients were acquired per spectrum. This setup was chosen due its high sensitivity towards low comonomer contents.

Quantitative $^{13}$C{$^1$H} NMR spectra were processed, integrated and quantitative properties determined using custom spectral analysis automation programs. All chemical shifts are internally referenced to the bulk methylene signal (δ+) at 30.00 ppm (J. Randall, Macromol. Sci., Rev. Macromol. Chem. Phys. 1989, C29, 201).

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$E_{total} = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1-butene were observed (J. Randall, Macromol. Sci., Rev. Macromol. Chem. Phys. 1989, C29, 201.) and all contents calculated with respect to all other monomers present in the polymer.

The amount isolated 1-butene incorporated in EEBEE sequences was quantified using the integral of the $_*B2$ sites at 38.3 ppm accounting for the number of reporting sites per comonomer:

$$B = I_{*B2}$$

The amount consecutively incorporated 1-butene in EEBBEE sequences was quantified using the integral of the $\alpha\alpha B2B2$ site at 39.4 ppm accounting for the number of reporting sites per comonomer:

$$BB = 2 * I_{\alpha\alpha B2B2}$$

The amount non consecutively incorporated 1-butene in EEBEBEE sequences was quantified using the integral of the $\beta\beta B2B2$ site at 24.7 ppm accounting for the number of reporting sites per comonomer:

$$BEB = 2 * I_{\beta\beta B2B2}$$

Due to the overlap of the *B2 and *βB2B2 sites of isolated (EEBEE) and non-consecutively incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = ( Btotal) / ( Etotal + Btotal + Htotal )$$

Characteristic signals corresponding to the incorporation of 1-hexene were observed (J. Randall, Macromol. Sci., Rev. Macromol. Chem. Phys. 1989, C29, 201.) and all contents calculated with respect to all other monomers present in the polymer.

The amount isolated 1-hexene incorporated in EEHEE sequences was quantified using the integral of the $_*B4$ sites at 39.9 ppm accounting for the number of reporting sites per comonomer:

$$H = I_{*B4}$$

The amount consecutively incorporated 1-hexene in EEHHEE sequences was quantified using the integral of the $\alpha\alpha B4B4$ site at 40.5 ppm accounting for the number of reporting sites per comonomer:

$$HH = 2 * I_{\alpha\alpha B4B4}$$

The amount non-consecutively incorporated 1-hexene in EEHEHEE sequences was quantified using the integral of the $\beta\beta B4B4$ site at 24.7 ppm accounting for the number of reporting sites per comonomer:

$$HEH = 2 * I_{\beta\beta B4B4}$$

Due to overlap of the $\beta\beta B2B2$ sites of non-consecutively incorporated (EEBEBEE) 1-butene and $\beta\beta B4B4$ sites of non-consecutively incorporated (EEHEHEE) 1-hexene the total amount of non-consecutive incorporation (EEBEBEE) 1-butene was assumed to be proportional to the amount of isolated 1-butene (B) insertion and the total amount of non-consecutive incorporation (EEHEHEE) 1-hexene was assumed to be proportional to the amount of isolated 1-hexene (H).

The total mole fraction of 1-hexene in the polymer was then calculated as:

$$f_H = (H_{total}) / (E_{total} + B_{total} + H_{total})$$

The mole percent comonomer incorporation is calculated from the mole fraction:

$$B \ [mol\%] = 100 * fB$$

$$H \ [mol\%] = 100 * fH$$

The weight percent comonomer incorporation is calculated from the mole fraction:

$$B \ [wt\%] = 100 * (fB * 56.11) / ((fB * 56.11) + (fH * 84.16) + ((1-(fB + fH)) * 28.05))$$

$$H \ [wt\%] = 100 * (fH * 84.16 ) / ((fB * 56.11) + (fH * 84.16) + ((1-(fB + fH)) * 28.05))$$

**Density**

Density was measured according to ISO 1183-187. Sample preparation was done by compression moulding in accordance with ISO 1872-2:2007.

**Differential scanning calorimetry (DSC)**

Differential scanning calorimetry (DSC) analysis, melting temperature ($T_m$) and melt enthalpy ($H_m$), crystallization temperature ($T_c$), and heat of crystallization ($H_c$) were measured with a TA Instrument Q200 differential scanning calorimetry (DSC) on 5 to 7 mg samples. DSC is run according to ISO 11357 / part 3 / method C2 in a heat / cool / heat cycle with a scan rate of 10 °C/min in the temperature range of -30 to +225 °C. Crystallization temperature ($T_c$) and heat of crystallization ($H_c$) are determined from the cooling step, while melting temperature ($T_m$) and melt enthalpy ($H_m$) are determined from the second heating step.

**Xylene Cold Soluble (XCS) content**

Xylene Cold Soluble fraction at room temperature (XCS, wt%) was determined at 25 °C according to ISO 16152; 5th edition; 2005-07-01.

**C6 FDA**

It was measured based on FDA section 177.1520. 1 g of a polymer film of 100 $\mu$m thickness is added to 400 ml hexane at 50°C for 2 hours while stirring with a reflux cooler. After 2 hours the mixture is immediately filtered on a filter paper. The precipitate is collected in an aluminium recipient and the residual hexane is evaporated on a steam bath under N2 flow. The amount of hexane solubles is determined by the formula ((wt. sample + wt. crucible) - (wt crucible)) / (wt. sample) $\times$ 100%.

**Tensile Modulus**

Tensile modulus in machine and transverse direction were determined according to ISO 527-3 at 23°C on the multilayer films as produced indicated below. Testing was performed at a cross head speed of 1 mm/min.

**Dart drop strength (DDI)**

Dart-drop was measured using ASTM D1709, method A (Alternative Testing Technique) from the multilayer films as produced indicated below. A dart with a 38 mm diameter hemispherical head is dropped from a height of 0.66 m onto a multilayer film clamped over a hole. Successive sets of twenty specimens are tested. One weight is used for each set and the weight is increased (or decreased) from set to set by uniform increments. The weight resulting in failure of 50 % of the specimens is calculated and reported.

**Haze and clarity**

Haze and clarity were determined according to ASTM D 1003-00 on multilayer films as produced indicated below.

**Optomechnical ability (OMA)**

Optomechnical ability (OMA) is understood as the ratio of mechanical (especially dart-drop strength (DDI) and tensile (MD)) behaviour, to optical performance, namely haze, wherein the mechanical properties are targeted to be as high as possible and the optical performance in the sense of haze is desired to be as low as possible.
The optomechanical ability (OMA) is determined according the formula given below:

$$OMA = \frac{Tensile\ Modulus\ (MD)[MPa] * DDI(g)}{Haze\ (50\ \mu m)[\%]}$$

**Sealing initiation temperature (SIT)**

The heat sealing initiation temperature (SIT) is the sealing temperature at which a sealing strength of > 5 N is achieved.
The sealing range was determined on a J&B Universal Sealing Machine Type 3000 of the multilayer films as produced indicated below with the following parameters:

Specimen width: 25.4 mm
Seal Pressure: 0.1 N/mm$^2$
Seal Time: 0.1 sec
Cool time: 99 sec
Peel Speed: 10 mm/sec
Start temperature 80 °C
End temperature: 150 °C
Increments: 10 °C
specimen is sealed A to A at each seal bar temperature and seal strength (force) is determined at each step.

The temperature is determined at which the seal strength reaches 5 N

**2. Examples**

*2.1. Catalyst system for the inventive examples*

*Catalyst for mLLDPE for sealing layer (SL) and outer layer (OL)*

The catalyst used for producing the mLLDPE of the sealing layer (SL) and outer layer (OL) for IE2 and IE3 was a metallocene catalyst with metallocene complex bis(1-methyl-3-n-butyl cyclopentadienyl)Zr(IV)Cl2 (CAS no. 151840-68-5) supported on carrier.
130 grams of a metallocene complex bis(1-methyl-3-n-butylcyclopentadienyl) zirconium (IV) dichloride (CAS no. 151840-68-5) and 9.67 kg of a 30% solution of commercial methylalumoxane (MAO) in toluene were combined and 3.18 kg dry purified toluene was added. Thus, obtained complex solution was added onto 17kg silica carrier Sylopol 55 SJ (supplied by Grace) by very slow uniform spraying over 2 hours. The temperature was kept below 30°C. The mixture was allowed to react for 3 hours after complex addition at 30°C.

*Catalyst for propylene 1-butene copolymer used in core layer (CL)*

The catalyst used in the polymerization processes for the C3C4 random copolymer composition for the core layer (CL) of IE1 to IE3 was prepared as follows:
The metallocene (MC1) (rac-anti-dimethylsilandiyl(2-methyl-4-phenyl-5-methoxy-6-tert-butyl-indenyl)(2-methyl-4-(4-tert-butylphenyl)indenyl)zirconium dichloride) has been synthesized as described in WO 2013/007650.
The catalyst was prepared using metallocene MC1 and a catalyst system of MAO and trityl tetrakis(pentafluorophenyl)borate according to Catalyst 3 of WO 2015/11135 with the proviso that the surfactant is 2,3,3,3-tetrafluoro-2-(1,1,2,2,3,3,3-heptafluoropropoxy)-1-propanol.

*2.2. a) Preparation of propylene 1-butene copolymer used in core layer (CL)*

The copolymer used in the core layer (CL) for the inventive examples (IE1 to IE3) was prepared in a two stage polymerization process, under the conditions outlined in Table 1, using a catalyst as defined above. Properties of the various fractions and final multimodal copolymers are also presented in Table 1.

**Table 1:** Production Data bimodal propylene-1-butene random copolymer for IE1 to IE3 (CL)

|  | Unit | polymer |
|---|---|---|
| **Prepolymerizer** |  |  |
| Temperature | [°C] | 20 |
| Pressure | [kPa] | 4918 |
| Residence time | [h] | 0.3 |
| **Loop reactor** |  |  |
| Temperature | [°C] | 75 |
| Pressure | [kPa] | 4869 |
| Residence time | [h] | 0.4 |
| Feed H2/C3 ratio | [mol/kmol] | 0.1 |
| Feed C4/C3 ratio | [mol/kmol] | 29.9 |
| Feed C2/C3 ratio | [mol/kmol] | 0.0 |
| Split | [wt%] | 39 |
| $MFR_2$ | [g/10 min] | 2.0 |
| C4 content of fraction A | [wt%] | 5.5 |
| **First GPR** |  |  |
| Temperature | [°C] | 80 |
| Pressure | [kPa] | 2500 |
| Residence time | [h] | 0.6 |
| Feed H2/C3 ratio | [mol/kmol] | 1.1 |
| Feed C2/C3 ratio | [mol/kmol] | 0.0 |
| Feed C4/C3 ratio | [mol/kmol] | 60 |
| Split | [wt%] | 61 |
| $MFR_2$ | [g/10 min] | 1.7 |
| C4 content of fraction B | [wt%] | 7.3 |

(continued)

| First GPR | | |
|---|---|---|
| C4 content after GPR | [wt%] | 6.6 |
| **Pellet** | | |
| C4 total | [wt%] | 6.6 |
| $MFR_2$ | [g/10 min] | 1.6 |
| MWD | [-] | 3.8 |
| Tc | [°C] | 102 |
| $Tm_1$ | [°C] | 139 |
| $Tm_2$ | [°C] | 121 |
| $Tm_1$ - Tc | [°C] | 37 |
| XCS | [wt%] | 0.71 |
| C6 FDA | [wt%] | 0.48 |
| Flexural modulus | [MPa] | 1015 |
| NIS 23°C | [kJ/m$^2$] | 4.6 |
| Haze, | [%] | 42 |

The pelletization of the copolymer was done on a ZSK 32 twin-screw extruder. The desired amount of copolymer powder, additives (1000 ppm of Irganox B215 supplied by BASF, being a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4), and 500 ppm of calcium stearate from Baerlocher) were mixed and extruder at 220°C, with a throughput of 100kg/h.

*2.2. b) Preparation of the metallocene catalyzed linear low density polyethylene (mLLDPE) used in sealing and outer layers (SL, OL)*

Polymerization was performed in a Borstar® PE 3G plant comprising a prepolymerization loop reactor, two loop reactors and a gas phase reactor, whereby the slurry from the prepolymerization reactor was withdrawn intermittently and directed into the first loop reactor, subsequently the slurry was withdrawn from the second loop reactor intermittently by using settling legs and directed to a flash vessel operated at a temperature of 50°C and a pressure of 3 bar and from there the polymer was directed to the gas phase reactor (GPR)

The polymerization conditions can be seen in Table 2:

**Table 2:** Production data for mLLDPE for IE2 (mLLDPE2) and IE3 (mLLDPE3)

| | Unit | mLLDPE2 | mLLDPE3 |
|---|---|---|---|
| **Prepolymerizer** | | | |
| Temperature | [°C] | 50 | 50 |
| Pressure | [MPa] | 5.7 | 5.7 |
| Catalyst feed | [g/h] | 36.99 | 33.10 |
| $H_2$ | [g/h] | 0.20 | 0 |
| $C_4$ | [g/h] | 100 | 0 |
| C2 feed [kg/h] | [kg/h] | 300 | 300 |
| Antistatica Statesafe | [ppm of C2 feed] | 10 | 10 |
| **Loop reactor 1** | | | |
| Temperature | [°C] | 85 | 85 |

(continued)

| Loop reactor 1 | | | |
|---|---|---|---|
| Pressure | [MPa] | 5.5 | 5.5 |
| Feed H2/C2 ratio | [mol/kmol] | 0.41 | 0.53 |
| Feed C4/C2 ratio | [mol/kmol] | 13.8 | 80.3 |
| C2 conc. | [mol%] | 3.49 | 2.39 |
| Split | [wt%] | 17.1 | 20.4 |
| MFR$_2$ | [g/10 min] | 0.4 | 6.0 |
| Density | [kg/m$^3$] | 940.1 | 939.0 |
| Loop reactor 2 | | | |
| Temperature | [°C] | 85 | 85 |
| Pressure | [MPa] | 5.4 | 5.4 |
| Residence time | [h] | ? | ? |
| Feed H2/C2 ratio | [mol/kmol] | 0.39 | 0.17 |
| Feed C4/C2 ratio | [mol/kmol] | 181.4 | 110.3 |
| C2 conc. | [mol%] | 2.65 | 2.38 |
| Split | [wt%] | 17.8 | 20.8 |
| MFR$_2$ of loop 2 fraction (calculated) | [g/10 min] | 5.6 | 5.9 |
| Density of loop 2 fraction (calculated) | [kg/m$^3$] | 940.1 | 938.5 |
| Gas phase reactor | | | |
| Temperature | [°C] | 75 | 75 |
| Pressure | [MPa] | 2 | 2 |
| Residence time | [h] | ? | ? |
| Feed H2/C3 ratio | [mol/kmol] | 0.19 | 0.24 |
| Feed C6/C2 ratio | [mol/kmol] | 36.0 | 47.4 |
| Feed C4/C2 ratio | [mol/kmol] | 0 | 0.21 |
| C2 partial pressure | [kPa] | 646 | 527.2 |
| Split | [wt%] | 62.7 | 58.8 |
| MFR$_2$ of GPR fraction (calculated) | [g/10 min] | 0.49 | 1.65 |
| Density of GPR fraction (calculated) | [kg/m$^3$] | 896 | 895 |
| Catalyst productivity | [kg/g] | 2.9 | 3.1 |
| Pellet | | | |
| C4 total | [mol%] | 0.2 | 0.2 |
| C6 total | [mol%] | 3.4 | 3.6 |
| MFR$_2$ | [g/10 min] | 1.2 | 2.8 |
| Density | [kg/m$^3$] | 913.9 | 913.1 |
| MWD | [-] | 5.5 | 4.0 |
| Tm | [°C] | 125 | 122.9 |

The polymers were mixed with 0.2 wt% Irganox B561. Then they were compounded and extruded under nitrogen atmosphere to pellets by using a CIMP90 extruder so that the SEI was 230 kWh/kg and the melt temperature 250°C

*2.3. Film compositions IE1 to IE3, CE1*

All films were 3 layer blown films with a sealing layer (SL), core layer (CL) and an outer layer (OL)

*Inventive Example 1 (IE1):*

The sealing layer (SL) and the outer layer (OL) are made of 90.0 wt% of mLLDPE1 and 10.0 wt% of LDPE, whereby

mLLDPE1 is example IE1 of EP 3 257 895 A1 having a 1-butene content of 0.3 mol%, a 1-hexene content of 2.6 mol%, density of 0.918 g/cm$^3$ and a melt flow rate MFR$_2$ (190 °C, 2.16 kg) of 1.5 g/10min;
and the LDPE is the low density polyethylene "FT5230" of Borealis AG having a density of 923 g/cm$^3$ and a melt flow rate MFR2 (190 °C, 2.16 kg) of 0.75 g/10min;
The core layer (CL) is made of the propylene 1-butene copolymer (PBC) prepared as described above.

*Inventive Example 2 (IE2):*

The sealing layer (SL) and the outer layer (OL) are made of 90.0 wt% of mLLDPE2 and 10.0 wt% of LDPE, whereby

mLLDPE2 is prepared as described above and the LDPE is the low density polyethylene "FT5230" of Borealis AG having a density of 923 g/cm$^3$ and a melt flow rate MFR2 (190 °C, 2.16 kg) of 0.75 g/10min
The core layer (CL) is made of the propylene 1-butene copolymer (PBC) prepared as described above.

*Inventive Example 3 (IE3):*

The sealing layer (SL) and the outer layer (OL) are made of 90.0 wt% of mLLDPE3 and 10.0 wt% of LDPE, whereby

mLLDPE3 is prepared as described above and the LDPE is the low density polyethylene "FT5230" of Borealis AG having a density of 923 g/cm$^3$ and a melt flow rate MFR2 (190 °C, 2.16 kg) of 0.75 g/10min
The core layer (CL) is made of the propylene 1-butene copolymer (PBC) prepared as described above.

*Comparative Example 1 (CE1):*

The sealing layer (SL) and the outer layer (OL) are made of 90.0 wt% of mLLDPE1 and 10.0 wt% of LDPE, whereby

mLLDPE1 is example IE1 of EP 3 257 895 A1 having a 1-butene content of 0.3 mol%, a 1-hexene content of 2.6 mol%, density of 0.918 g/cm$^3$ and a melt flow rate MFR$_2$ (190 °C, 2.16 kg) of 1.5 g/10min;
and the LDPE is the low density polyethylene "FT5230" of Borealis AG having a density of 923 g/cm$^3$ and a melt flow rate MFR2 (190 °C, 2.16 kg) of 0.75 g/10min;
The core layer (CL) is made of the commercial polypropylene ethylene random copolymer RB707CF of Borealis AG having a melt flow rate MFR2 (230°C) of 1.5 g/10min and a melting temperature Tm of 145°C.

*Compounding of material (M) for the sealing layers (SL) and outer layers (OL)*

Melt mixing was performed in a Thermo Fisher (PRISM) TSE 24 twin-screw extruder at 220 °C followed by solidification of the resulting melt strands in a water bath and pelletization.

*Production of films*

Three layer blown polymer films were produced on a three layer Collin lab scale blown film line. The melt temperature of the sealing layer (SL) and the outerlayer (OL) was 185°C to 195°C. The melt temperature of the core layer (CL) was in the range of 205°C to 215°C. The throughput of the extruders was in sum 80 kg/h. The film structure was SL-CL-OL with a core layer of 25 μm (CL) and sealing layer (SL) and outer layer (OL) of 12.5 μm. Layer thickness

has been determined by Scanning Electron Microscopy. The material used for the layers multilayer films is indicated in the table 3. The properties of the multilayer films are indicated in table 4.

**Table 3**: Layer structure of the multilayer films

|  | μm | IE1 | IE2 | IE3 | CE1 |
|---|---|---|---|---|---|
| SL | 12.5 | mLLDPE1/LDPE (90/10) | mLLDPE2/LDPE (90/10) | mLLDPE3/LDPE (90/10) | mLLDPE1/LDPE (90/10) |
| CL | 25 | PBC | PBC | PBC | RB707CF |
| OL | 12.5 | mLLDPE1/LDPE (90/10) | mLLDPE1/LDPE (90/10) | mLLDPE3/LDPE (90/10) | mLLDPE1/LDPE (90/10) |

**Table 4**: Properties of the multilayer films

|  |  | IE1 | IE2 | IE3 | CE1 |
|---|---|---|---|---|---|
| Haze | [%] | 3.79 | 4.19 | 4.55 | 3.48 |
| Clarity | [%] | 99.5 | 99.5 | 99.4 | 99.5 |
| TM/MD | [MPa] | 654 | 643 | 613 | 666 |
| TM/TD | [MPa] | 631 | 621 | 609 | 633 |
| DDI | [g] | 336 | 301 | 337 | 129 |
| SIT | [°C] | 87 | 77 | 65 | 86 |
| OMA |  | 57979 | 46191 | 45402 | 24688 |

From the above table it can be clearly seen that the inventive multilayer blown films based on the specific core layer (CL), show with similar stiffness compared to the comparative example much higher DDI and an improved overall performance, i.e. high OMA.

In addition, with the combination of the specific core layer (CL) and sealing as well as outer layer (SL, OL) based on trimodal mLLDPE2 and mLLDPE3, it is possible to get improved sealing properties, i.e. very low SIT.

**Claims**

1. Multilayer blown film comprising at least two layers, one sealing layer (SL) and one base layer (BL), wherein

    a) the sealing layer (SL) comprises

        (i) at least 90.0 wt% up to 100.0 wt%, based on the total weight of the sealing layer (SL), of a first polymer composition (PC1), said first polymer composition comprises at least 70.0 wt% up to 100.0 wt%, based on the total weight of the first polymer composition (PC1), of a metallocene catalyzed linear low density polyethylene (mLLDPE), said metallocene catalyzed linear low density polyethylene (mLLDPE) having a density, determined according to ISO 1183-187 in the range of 0.890 to 0.930 g/cm$^3$ and 0.0 up to 30.0 wt%, based on the total weight of first polymer composition (PC1), of a further polyethylene polymer selected from the group of low density polyethylene (LDPE) having long-chain branched (LCB) structures

        (ii) and 0.0 up to 10.0 wt%, based on the total weight of the sealing layer (SL), of additives (AD) selected from the group consisting of antioxidants, light stabilizers, acid scavengers, processing aids, anti-blocking aids, nucleating agents, slip agents and mixtures thereof, and

    b) the base layer (BL) comprises

        (iii) at least 90.0 wt% up to 100.0 wt%, based on the total weight of the base layer (BL), of a metallocene catalyzed bimodal propylene 1-butene random copolymer

        (iv) and 0.0 up to 10.0 wt%, based on the total weight of the base layer (BL), of additives (AD) selected from the group consisting of antioxidants, light ptabilizers, acid scavengers, processing aids, anti-blocking aids, nucleating agents, slip agents and mixtures thereof.

2.  Multilayer blown film according to claim 1, wherein the multilayer blown film comprises in addition to the one sealing layer (SL) and the one base layer (BL) at least one further layer, said one further layer being an outer layer (OL), , the stacking order being sealing layer/base layer/outer layer, (SL)/(BL)/(OL), whereby
    c) the outer (OL) comprises

    (v) at least 90.0 wt%, based on the total weight of the outer (OL), of a 2nd polymer composition (PC2), said 2nd polymer composition (PC2) comprises at least 90.0 wt%, based on the total weight of the 2nd polymer composition (PC2), of a polyethylene or polypropylene
    (vi) and 0.0 up to 10 wt%, based on the total weight of the outer layer (OL), of additives (AD) selected from the group consisting of antioxidants, light stabilizers, acid scavengers, processing aids, anti-blocking aids, nucleating agents, slip agents and mixtures thereof.

3.  Multilayer blown film according to claim 1 or 2, wherein the propylene 1-butene copolymer

    a. comprises, based on the total weight of the propylene 1-butene copolymer 85.0 to 98.0 wt%, preferably 87.0 to 97.0 wt% and more preferably 88.5 to 96.5 wt% of propylene and 2.0 to 15.0 wt%, preferably 3.0 to 13.0 wt% and more preferably 3.5 to 11.5 wt% of 1-butene and
    b. has an $MFR_2$ (230°C/2.16kg, ISO 1133) in the range of from 0.5 to below 4.0 g/10 min, preferably in the range of 0.7 to 3.8 g/10 min, more preferably in the range of from 0.8 to 3.5 g/10 min and even more preferably in the range of from 0.9 to 3.0 g/10 min.

4.  Multilayer blown film according to claim 3, wherein the propylene 1-butene copolymer comprises:

    30.0 to 70.0 wt% of a propylene 1-butene copolymer (A) having an $MFR_2$ of 0.5 to 20.0 g/10 min and a 1-butene content of 2.0 to 10.0 wt%; and
    70.0 to 30.0 wt% of a propylene 1-butene copolymer (B) having an $MFR_2$ of 0.5 to 20.0 g/10 min and a 1-butene content of 3.5 to 20.0 wt%;
    wherein copolymers (A) and (B) are different and the amount of (A) and (B) sums up to 100.0 wt%.

5.  Multilayer blown film according to any one of the preceding claims 1 to 4, wherein the metallocene catalyzed linear low density polyethylene (mLLDPE) is a bimodal polyethylene terpolymers comprising at least

    (i) as lower molecular weight (LMW) component an ethylene polymer component (A) having an $MFR_2$ of 1.0 to 10.0 g/10 min (according to ISO 1133 at 190°C under 2.16 kg load) and
    (ii) as higher molecular weight (HMW) component an ethylene polymer component (B) having an $MFR_2$ of 0.2 to 0.9 g/10 min (according to ISO 1133 at 190°C under 2.16 kg load),

    whereby the density of ethylene polymer component (A) is higher than the density of the ethylene polymer component (B); the density of the ethylene polymer component (A) being in the range of 0.930 to 0.950 g/cm$^3$.

6.  Multilayer blown film according to any one of the preceding claims 1 to 4, wherein the metallocene catalyzed linear low density polyethylene (mLLDPE) is a trimodal polyethylene terpolymers comprise at least

    (i) between 10 to < 25 wt% of an ethylene polymer component (A) having an $MFR_2$ of 0.1 to 10.0 g/10 min (according to ISO 1133 at 190°C under 2.16 kg load) and
    (ii) between 10 to < 25 wt% of an ethylene polymer component (B) having an $MFR_2$ of 2.0 to 150.0 g/10 min (according to ISO 1133 at 190°C under 2.16 kg load) and
    (iii) > 50 and 80 wt% of an ethylene polymer component (C) having an $MFR_2$ of
    0.1 to 5.0 g/10 min (according to ISO 1133 at 190°C under 2.16 kg load) and wherein the densities of ethylene polymer components (A) and (B) are each between 0.925 and 0.970 g/cm$^3$ and the density of ethylene polymer component (C) has a density between 0.880 and 0.920 g/cm$^3$.

7.  Multilayer blown film according to any one of the preceding claims 1 to 6, wherein the the low density polyethylene (LDPE) is coming from a high-pressure polymerization process, the low density polyethylene (LDPE) preferably having a density in the range of 0.910 to 0.940 g/cm$^3$, more preferably in the range of 0.915 to 0.935 g/cm$^3$, still

more preferably in the range of 0.918 to 0.930 g/cm$^3$ and a melt flow rate MFR2 (190°C, 2.16 kg) in the range of from 0.05 to 2.0 g/10min, more preferably in the range of from 0.10 to 1.8 g/10min, and even more preferably in the range of from 0.15 to 1.5 g/10 min.

8. Multilayer blown film according to any one of the preceding claims 2 to 7, wherein the 2$^{nd}$ polymer composition (PC2) is identical to the 1$^{st}$ polymer composition (PC1).

9. Multilayer blown film according to any one of the preceding claims 1 to 8, wherein the thickness of the base layer (BL) is preferably in the range of 10 to 250 $\mu$m, more preferably in the range of 15 to 200 $\mu$m, yet more preferably in the range of 20 to 100 $\mu$m, and the sealing layer (SL) and the optional outer layer (OL) has a thickness in the range of 0.5 to 50 $\mu$m, more preferably in the range of 1.0 to 30 $\mu$m and even more preferably in the range of 5 to 20 $\mu$m, whereby the thickness of each of the sealing layer (SL) and the optional outer layer (OL) is less than the thickness of the base layer (BL).

10. Multilayer blown film according to any one of the preceding claims 1 to 9, whereby the tensile modulus of the film, determined according to ISO 527 at 23°C on multilayer blown film with a thickness of 50 $\mu$m, in machine direction as well as in transverse direction is in the range of from 400 to 1200 MPa, preferably of from 500 to 1000 MPa, and more preferably of from 600 to 800 MPa.

11. Multilayer blown film according to any one of the preceding claims 1 to 10, whereby the films have a sealing initiation temperature (SIT) (determined on 50 $\mu$m multilayer blown film as described in the experimental part) in the range of from 55°C to 100°C, more preferably in the range of from 60°C to 95°C, and even more preferably in the range of from 62°C to 90°C.

12. Multilayer blown film according to any one of the preceding claims 1 to 11, whereby the films have a haze (determined according to ASTM D 1003-00 on 50 $\mu$m multilayer blown film) in the range of from 0.5 to below 10.0%, more preferably in the range of from 1.0 to below 8.0%, and even more preferably in the range of from 1.5 to below 5.0 %, and a clarity (determined according to ASTM D1003-00 on blown films with a thickness of 50 $\mu$m) of at least 95.0% up to 100.0%, preferably of at least 98.0% up to 100.0% and even more preferably of at least 99.0% up to 100.0%.

13. Multilayer blown film according to any one of the preceding claims 1 to 12, whereby the films have a dart-drop impact strength (DDI) determined according to ASTM D1709, method A on a 50 $\mu$m multilayer blown film of at least 150 g up to 550 g, more preferably in the range of 200 to 500 g, and still more preferably in the range of 250 to 450 g, like in the range of 290 to 400 g.

14. Multilayer blown film according to any one of the preceding claims 1 to 13, whereby the films have an optomechanical ability (OMA) determined according the formula:

$$OMA = \frac{Tensile\ Modulus\ (MD)[MPa] * DDI(g)}{Haze\ (50\ \mu m)[\%]}$$

determined on 50 $\mu$m multilayer blown film of at least 30000 [MPa*g/%] up to 90000 [MPa*g/%], preferably in the range of from 40000 [MPa*g/%] up to 80000 [MPa*g/%],

**Patentansprüche**

1. Mehrschichtige Blasfolie, die wenigstens zwei Schichten, nämlich eine Siegelschicht (SL) und eine Basisschicht (BL) umfasst, wobei:

a) die Siegelschicht (SL) umfasst:

(i) wenigstens 90 Gew.-% bis 100 Gew.-%, basierend auf dem Gesamtgewicht der Siegelschicht (SL), einer ersten Polymerzusammensetzung (PC1), wobei die erste Polymerzusammensetzung wenigstens 70,0 Gew.-% bis 100,0 Gew.-%, basierend auf dem Gesamtgewicht der ersten Polymerzusammensetzung (PC1), eines Metallocen-katalysierten linearen niederdichten Polyethylens (mLLDPE), wobei das Metallocen-katalysierte lineare niederdichte Polyethylen (mLLDPE) eine Dichte, bestimmt gemäß ISO 1183-187, im Bereich von 0,890 bis 0,930 g/cm$^3$ aufweist, und 0,0 bis 30,0 Gew.-%, basierend auf dem Gesamtgewicht der ersten Polymerzusammensetzung (PC1), eines weiteren Polyethylenpolymers, das aus der Gruppe von niederdichtem Polyethylen (LDPE) mit langkettigen, verzweigten (LCB) Strukturen ausgewählt ist, umfasst, und

(ii) 0,0 bis 10,0 Gew.-%, basierend auf dem Gesamtgewicht der Siegelschicht (SL), von Zusätzen (AD), die aus der Gruppe ausgewählt ist, die aus Antioxidationsmitteln, Lichtstabilisatoren, Säurefängern, Verarbeitungshilfen, Antiblockmitteln, Keimbildnern, Gleitadditiven und Mischungen aus diesen besteht,

b) die Basisschicht (BL) umfasst:

(iii) wenigstens 90,0 Gew.-% bis 100 Gew.-%, basierend auf dem Gesamtgewicht der Basisschicht (BL), eines Metallocen-katalysierten bimodalen Propylen-1-Buten-Random-Copolymers, und
(iv) 0,9 bis 10,0 Gew.-%, basierend auf dem Gesamtgewicht der Basisschicht (BL), von Zusätzen (AD), die aus der Gruppe ausgewählt sind, die aus Antioxidationsmitteln, Lichtstabilisatoren, Säurefängern, Verarbeitungshilfen, Antiblockmitteln, Keimbildnern, Gleitadditiven und Mischungen aus diesen besteht.

2. Mehrschichtige Blasfolie nach Anspruch 1, wobei die mehrschichtige Blasfolie zusätzlich zu der einen Siegelschicht (SL) und der einen Basisschicht (BL) wenigstens eine weitere Schicht umfasst, wobei die eine weitere Schicht eine Außenschicht (OL) ist, wobei die Stapelreihenfolge Siegelschicht/Basisschicht/Außenschicht (SL)/(BL)/(OL) ist, wobei:
   c) die Außenschicht (OL) umfasst:

(v) wenigstens 90,0 Gew.-%, basierend auf dem Gesamtgewicht der Außenschicht (OL), einer zweiten Polymerzusammensetzung (PC2), wobei die zweite Polymerzusammensetzung (PC2) wenigstens 90,0 Gew.-%, basierend auf dem Gesamtgewicht der zweiten Polymerzusammensetzung (PC2), eines Polyethylen oder Polypropylen umfasst, und
(vi) 0,0 bis 10 Gew.-%, basierend auf dem Gesamtgewicht der Außenschicht (OL) von Zusätzen (AD), die aus der Gruppe ausgewählt sind, die aus Antioxidationsmitteln, Lichtstabilisatoren, Säurefängern, Verarbeitungshilfen, Antiblockmitteln, Keimbildnern, Gleitadditiven und Mischungen aus diesen besteht.

3. Mehrschichtige Blasfolie nach Anspruch 1 oder 2, wobei das Propylen 1-Buten-Copolymer:

a. basierend auf dem Gesamtgewicht des Propylen 1-Buten-Copolymers 85,0 bis 98,0 Gew.-%, bevorzugt 87,0 bis 97,0 Gew.-% und stärker bevorzugt 88,5 bis 96,5 Gew.-% Propylen und 2,0 bis 15 Gew.-%, bevorzugt 3,0 bis 13,0 Gew.-% und stärker bevorzugt 3,5 bis 11,5 Gew.-% 1-Buten umfasst, und
b. eine Schmelzflussrate MFR$_2$ (230°C/2,16 kg, ISO 1133) im Bereich von 0,5 bis unter 4,0 g/10 min, bevorzugt im Bereich von 0,7 bis 3,8 g/10 min, stärker bevorzugt im Bereich von 0,8 bis 3,5 g/10 min und noch stärker bevorzugt im Bereich von 0,9 bis 3,0 g/10 min aufweist.

4. Mehrschichtige Blasfolie nach Anspruch 3, wobei das Propylen 1-Buten-Copolymer umfasst:

30,0 bis 70,0 Gew.-% eines Propylen 1-Buten-Copolymers (A) mit einer Schmelzflussrate MFR$_2$ von 0,5 bis 20,0 g/10 min und einem 1-Buten-Anteil von 2,0 bis 10,0 Gew.-%, und
70,0 bis 30,0 Gew.-% eines Propylen 1-Buten-Copolymers (B) mit einer Schmelzflussrate MFR$_2$ von 0,5 bis 20 g/10 min und einem 1-Buten-Anteil von 3,5 bis 20,0 Gew.-%,
wobei die Copolymere (A) und (B) verschieden sind und sich die Anteile von (A) und (B) zu 100,0 Gew.-% summieren.

5. Mehrschichtige Blasfolie nach einem der vorstehenden Ansprüche 1 bis 4, wobei das Metallocen-katalysierte lineare niederdichte Polyethylen (mLLDPE) ein bimodales Polyethylen-Terpolymer ist, das wenigstens Folgendes umfasst:

(i) als eine Komponente mit einem niedrigeren Molekulargewicht (LMV), eine Ethylen-Polymer-Komponente (A) mit einer Schmelzflussrate MFR$_2$ von 1,0 bis 10,0 g/10 min (gemäß ISO 1133 bei 190°C unter einer Last von 2,16 kg), und
(ii) als eine Komponente mit einem höheren Molekulargewicht (HMW), eine Ethylen-Polymer-Komponente (B) mit einer Schmelzflussrate MFR$_2$ von 0,2 bis 0,9 g/10 min (gemäß ISO 1133 bei 190°C unter einer Last von 2,16 kg),

wobei die Dichte der Ethylen-Polymer-Komponente (A) höher ist als die Dichte der Ethylen-Polymer-Komponente (B), wobei die Dichte der Ethylen-Polymer-Komponente (A) im Bereich von 0,930 bis 0,950 g/cm$^3$ liegt.

6. Mehrschichtige Blasfolie nach einem der vorstehenden Ansprüche 1 bis 4, wobei das Metallocen-katalysierte lineare niederdichte Polyethylen (mLLDPE) ein trimodales Polyethylen-Terpolymer ist, das wenigstens Folgendes umfasst:

(i) zwischen 10 und < 25 Gew.-% einer Ethylenpolymerkomponente (A) mit einer Schmelzflussrate MFR$_2$ von 0,1 bis 10,0 g/10 min (gemäß ISO 1133 bei 190°C unter einer Last von 2,16 kg),
(ii) zwischen 10 und < 25 Gew.-% einer Ethylenpolymerkomponente (B) mit einer Schmelzflussrate MFR$_2$ von 2,0 bis 150,0 g/10 min (gemäß ISO 1133 bei 190°C unter einer Last von 2,16 kg), und
(iii) zwischen > 50 und 80 Gew.-% einer Ethylenpolymerkomponente (C) mit einer Schmelzflussrate MFR$_2$ von 0,1 bis 5,0 g/10 min (gemäß ISO 1133 bei 190°C unter einer Last von 2,16 kg),

wobei die Dichten der Ethylenpolymerkomponenten (A) und (B) jeweils zwischen 0,925 und 0,970 g/cm$^3$ betragen und die Dichte der Ethylenpolymerkomponente (C) zwischen 0,880 und 0,920 g/cm$^3$ beträgt.

7. Mehrschichtige Blasfolie nach einem der vorstehenden Ansprüche 1 bis 6, wobei das niederdichte Polyethylen (LDPE) aus einem Hochdruck-Polymerisationsprozess stammt, wobei das niederdichte Polyethylen (LDPE) bevorzugt eine Dichte im Bereich von 0,910 bis 0,940 g/cm$^3$, stärker bevorzugt im Bereich von 0,915 bis 0,935 g/cm$^3$ und noch stärker bevorzugt im Bereich von 0,918 bis 0,930 g/cm$^3$ und eine Schmelzflussrate MFR$_2$ (190°C, 2,16 kg) im Bereich von 0,05 bis 2,0 g/10 min, stärker bevorzugt im Bereich von 0,10 bis 1,8 g/10 min und noch stärker bevorzugt im Bereich von 0,15 bis 1,5 g/10 min aufweist.

8. Mehrschichtige Blasfolie nach einem der vorstehenden Ansprüche 2 bis 7, wobei die zweite Polymerzusammensetzung (PC2) identisch mit der ersten Polymerzusammensetzung (PC1) ist.

9. Mehrschichtige Blasfolie nach einem der vorstehenden Ansprüche 1 bis 8, wobei die Dicke der Basisschicht (BL) bevorzugt im Bereich von 10 bis 250 $\mu$m, stärker bevorzugt im Bereich von 15 bis 200 $\mu$m und noch stärker bevorzugt im Bereich von 20 bis 100 $\mu$m liegt und wobei die Siegelschicht (SL) und die optionale Außenschicht (OL) eine Dicke im Bereich von 0,5 bis 50 $\mu$m, stärker bevorzugt im Bereich von 1,0 bis 30 $\mu$m und noch stärker bevorzugt im Bereich von 5 bis 20 $\mu$m aufweist, wobei die Dicken jeweils der Siegelschicht (SL) und der optionalen Außenschicht (OL) kleiner als die Dicke der Basisschicht (BL) sind.

10. Mehrschichtige Blasfolie nach einem der vorstehenden Ansprüche 1 bis 9, wobei das Zugmodul der Folie, bestimmt gemäß ISO 527 bei 23°C an einer mehrschichtigen Blasfolie mit einer Dicke von 50 $\mu$m, in der Maschinenrichtung und auch in der Querrichtung im Bereich von 400 bis 1200 MPa, bevorzugt von 500 bis 1000 MPa und stärker bevorzugt von 600 bis 800 MPa liegt.

11. Mehrschichtige Blasfolie nach einem der vorstehenden Ansprüche 1 bis 10, wobei die Folien eine Siegelstarttemperatur (SIT) (bestimmt an einer 50 $\mu$m dicken mehrschichtigen Blasfolie wie in dem Experimentabschnitt beschrieben) im Bereich von 55°C bis 100°C, stärker bevorzugt im Bereich von 60°C bis 95°C und noch stärker bevorzugt im Bereich von 62°C bis 90°C aufweisen.

12. Mehrschichtige Blasfolie nach einem der vorstehenden Ansprüche 1 bis 11, wobei die Folien eine Trübung (bestimmt gemäß ASTM D 1003-00 an einer 50 $\mu$m dicken mehrschichtigen Blasfolie) im Bereich von 0,5 bis unter 10,0 %, stärker bevorzugt im Bereich von 1,0 bis unter 8,0 % und noch stärker bevorzugt im Bereich von 1,5 bis unter 5,0 % aufweisen,
und eine Klarheit (bestimmt gemäß ASTM D1003-00 an Blasfolien mit einer Dicke von 50 $\mu$m) von wenigstens 95% bis 100,0%, bevorzugt von wenigstens 98,0% bis 100,0% und noch stärker bevorzugt von wenigstens 99,0% bis 100,0% aufweisen.

13. Mehrschichtige Blasfolie nach einem der vorstehenden Ansprüche 1 bis 12, wobei die Folien eine Durchstoßfestigkeit (DDI), bestimmt gemäß ASTM D1709, Methode A an einer 50 $\mu$m dicken mehrschichtigen Blasfolie von wenigstens 150 g bis 550 g, stärker bevorzugt im Bereich von 200 bis 500 g und noch stärker bevorzugt im Bereich von 250 bis 450 g wie etwa im Bereich von 290 bis 400 g aufweisen.

14. Mehrschichtige Blasfolie nach einem der vorstehenden Ansprüche 1 bis 13, wobei die Folien eine optomechanische Fähigkeit (OMA), bestimmt gemäß der folgenden Formel

$$OMA = \frac{Zugmodul\ (MD)[MPa] * DDI(g)}{Tr\ddot{u}bung\ (50\ \mu m)[\%]}$$

bestimmt an einer 50 μm dicken mehrschichtigen Blasfolie, von wenigstens 30000 [MPa*g/%] bis 90000 [MPa*g/%], bevorzugt im Bereich von 40000 [MPa*g/%] bis 80000 [MPa*g/%] aufweisen.

**Revendications**

1. Film soufflé multicouche comprenant au moins deux couches, une couche de scellement (SL) et une couche de base (BL), dans lequel

    a) la couche de scellement (SL) comprend

    (i) au moins 90,0 % en poids et jusqu'à 100,0 % en poids, par rapport au poids total de la couche de scellement (SL), d'une première composition de polymère (PC1), ladite première composition de polymère comprenant au moins 70,0 % en poids et jusqu'à 100,0 % en poids, par rapport au poids total de la première composition de polymère (PC1), d'un polyéthylène linéaire basse densité catalysé par un métallocène (mLLDPE), ledit polyéthylène linéaire basse densité catalysé par un métallocène (mLLDPE) ayant une densité, déterminée selon la norme ISO 1183-187, dans la plage allant de 0,890 à 0,930 g/cm$^3$, et de 0,0 à 30,0 % en poids, par rapport au poids total de la première composition de polymère (PC1), d'un autre polymère polyéthylène choisi dans le groupe du polyéthylène basse densité (LDPE) ayant des structures ramifiées à longue chaîne (LCB)
    (ii) et de 0,0 à 10,0 % en poids, par rapport au poids total de la couche de scellement (SL), d'additifs (AD) choisis dans le groupe constitué par les antioxydants, les photostabilisants, les piégeurs d'acides, les auxiliaires de traitement, les auxiliaires anti-adhérents, les agents de nucléation, les agents glissants et les mélanges de ceux-ci, et

    b) la couche de base (BL) comprend

    (iii) au moins 90,0 % en poids et jusqu'à 100,0 % en poids, par rapport au poids total de la couche de base (BL), d'un copolymère aléatoire bimodal de propylène/1-butène catalysé par un métallocène
    (iv) et de 0,0 jusqu'à 10,0 % en poids, par rapport au poids total de la couche de base (BL), d'additifs (AD) choisis dans le groupe constitué par les antioxydants, les photostabilisants, les piégeurs d'acides, les auxiliaires de traitement, les auxiliaires anti-adhérents, les agents de nucléation, les agents glissants et les mélanges de ceux-ci.

2. Film soufflé multicouche selon la revendication 1, le film soufflé multicouche comprenant, en plus de la couche de scellement (SL) et de la couche de base (BL), au moins une autre couche, ladite une autre couche étant une couche extérieure (OL), l'ordre d'empilage étant couche de scellement/couche de base/couche extérieure, (SL)/(BL)/(OL), c) la couche extérieure (OL) comprenant

    (v) au moins 90,0 % en poids, par rapport au poids total de la couche extérieure (OL), d'une 2$^e$ composition de polymère (PC2), ladite 2$^e$ composition de polymère (PC2) comprenant au moins 90,0 % en poids, par rapport au poids total de la deuxième composition de polymère (PC2), d'un polyéthylène ou d'un polypropylène
    (vi) et de 0,0 jusqu'à 10,0 % en poids, par rapport au poids total de la couche extérieure (OL), d'additifs (AD) choisis dans le groupe constitué par les antioxydants, les photostabilisants, les piégeurs d'acides, les auxiliaires de traitement, les auxiliaires anti-adhérents, les agents de nucléation, les agents glissants et les mélanges de ceux-ci.

3. Film soufflé multicouche selon la revendication 1 ou 2, dans lequel le copolymère propylène/1-butène

    a. comprend, par rapport au poids total du copolymère propylène/1-butène, 85,0 à 98,0 % en poids, de préférence 87,0 à 97,0 % en poids et plus préférentiellement 88,5 à 96,5 % en poids de propylène et 2,0 à 15,0 % en poids, de préférence 3,0 à 13,0 % en poids et plus préférentiellement 3,5 à 11,5 % en poids de 1-butène, et
    b. a un MFR$_2$ (230 °C/2,16 kg, ISO 1133) dans la plage allant de 0,5 à moins de 4,0 g/10 min, de préférence dans la plage allant de 0,7 à 3,8 g/10 min, plus préférentiellement dans la plage allant de 0,8 à 3,5 g/10 min et encore plus préférentiellement dans la plage allant de 0,9 à 3,0 g/10 min.

4. Film soufflé multicouche selon la revendication 3, dans lequel le copolymère propylène/1-butène comprend :

30,0 à 70,0 % en poids d'un copolymère propylène/1-butène (A) ayant un $MFR_2$ de 0,5 à 20,0 g/10 min et une teneur en 1-butène de 2,0 à 10,0 % en poids ; et
70,0 à 30,0 % en poids d'un copolymère propylène/1-butène (B) ayant un $MFR_2$ de 0,5 à 20,0 g/10 min et une teneur en 1-butène de 3,5 à 20,0 % en poids ;
dans lequel les copolymères (A) et (B) sont différents et la somme des quantités de (A) et (B) est égale à 100,0% en poids.

5. Film soufflé multicouche selon l'une quelconque des revendications 1 à 4 précédentes, dans lequel le polyéthylène linéaire basse densité catalysé par un métallocène (mLLDPE) est un terpolymère bimodal de polyéthylène comprenant au moins

(i) en tant que composant de poids moléculaire inférieur (LMW), un composant polymère d'éthylène (A) ayant un $MFR_2$ de 1,0 à 10,0 g/10 min (selon la norme ISO 1133 à 190 °C sous une charge de 2,16 kg) et
(ii) en tant que composant de poids moléculaire supérieur (HMW), un composant polymère d'éthylène (B) ayant un $MFR_2$ de 0,2 à 0,9 g/10 min (selon la norme ISO 1133 à 190 °C sous une charge de 2,16 kg),

la densité du composant polymère d'éthylène (A) étant supérieure à la densité du composant polymère d'éthylène (B) ; la densité du composant polymère d'éthylène (A) étant dans la plage allant de 0,930 à 0,950 g/cm$^3$.

6. Film soufflé multicouche selon l'une quelconque des revendications 1 à 4 précédentes, dans lequel le polyéthylène linéaire basse densité catalysé par un métallocène (mLLDPE) est un terpolymère trimodal de polyéthylène comprenant au moins

(i) entre 10 et < 25 % en poids d'un composant polymère d'éthylène (A) ayant un $MFR_2$ de 0,1 à 10,0 g/10 min (selon la norme ISO 1133 à 190 °C sous une charge de 2,16 kg) et
(ii) entre 10 et < 25 % en poids d'un composant polymère d'éthylène (B) ayant un $MFR_2$ de 2,0 à 150,0 g/10 min (selon la norme ISO 1133 à 190 °C sous une charge de 2,16 kg) et
(iii) > 50 et 80 % en poids d'un composant polymère d'éthylène (C) ayant un $MFR_2$ de 0,1 à 5,0 g/10 min (selon la norme ISO 1133 à 190 °C sous une charge de 2,16 kg) et

dans lequel les densités des composants polymères d'éthylène (A) et (B) sont chacune comprises entre 0,925 et 0,970 g/cm$^3$ et la densité du composant polymère d'éthylène (C) est comprise entre 0,880 et 0,920 g/cm$^3$.

7. Film soufflé multicouche selon l'une quelconque des revendications 1 à 6 précédentes, dans lequel le polyéthylène basse densité (LDPE) est issu d'un procédé de polymérisation à haute pression, le polyéthylène basse densité (LDPE) ayant de préférence une densité dans la plage allant de 0,910 à 0,940 g/cm$^3$, plus préférentiellement dans la plage allant de 0,915 à 0,935 g/cm$^3$, encore plus préférentiellement dans la plage allant de 0,918 à 0,930 g/cm$^3$ et un indice de fluidité $MFR_2$ (190 °C, 2,16 kg) dans la plage allant de 0,05 à 2,0 g/10 min, plus préférentiellement dans la plage allant de 0,10 à 1,8 g/10 min, et encore plus préférentiellement dans la plage allant de 0,15 à 1,5 g/10 min.

8. Film soufflé multicouche selon l'une quelconque des revendications 2 à 7 précédentes, dans lequel la 2$^e$ composition de polymère (PC2) est identique à la 1$^{re}$ composition de polymère (PC1).

9. Film soufflé multicouche selon l'une quelconque des revendications 1 à 8 précédentes, dans lequel l'épaisseur de la couche de base (BL) est de préférence dans la plage allant de 10 à 250 $\mu$m, plus préférentiellement dans la plage allant de 15 à 200 $\mu$m, encore plus préférentiellement dans la plage allant de 20 à 100 $\mu$m, et la couche de scellement (SL) et la couche extérieure optionnelle (OL) ont une épaisseur dans la plage allant de 0,5 à 50 $\mu$m, plus préférentiellement dans la plage allant de 1,0 à 30 $\mu$m, et encore plus préférentiellement dans la plage allant de 5 à 20 $\mu$m, l'épaisseur de chacune parmi la couche de scellement (SL) et la couche extérieure optionnelle (OL) étant inférieure à l'épaisseur de la couche de base (BL).

10. Film soufflé multicouche selon l'une quelconque des revendications 1 à 9 précédentes, le module de traction du film, déterminé selon la norme ISO 527 à 23 °C sur un film soufflé multicouche d'une épaisseur de 50 $\mu$m, dans le

sens machine ainsi que dans le sens transversal, étant dans la plage allant de 400 à 1 200 MPa, de préférence de 500 à 1 000 MPa, et plus préférentiellement de 600 à 800 MPa.

11. Film soufflé multicouche selon l'une quelconque des revendications 1 à 10 précédentes, les films ayant une température d'initiation du scellement (SIT) (déterminée sur un film soufflé multicouche de 50 $\mu$m comme décrit dans la partie expérimentale) dans la plage allant de 55 °C à 100 °C, plus préférentiellement dans la plage allant de 60 °C à 95 °C, et encore plus préférentiellement dans la plage allant de 62 °C à 90 °C.

12. Film soufflé multicouche selon l'une quelconque des revendications 1 à 11 précédentes, les films ayant un trouble (déterminé selon la norme ASTM D 1003-00 sur un film soufflé multicouche de 50 $\mu$m) dans la plage allant de 0,5 à moins de 10,0 %, plus préférentiellement dans la plage allant de 1,0 à moins de 8,0 %, et encore plus préférentiellement dans la plage allant de 1,5 à moins de 5,0 %,
et une transparence (déterminée selon la norme ASTM D1003-00 sur des films soufflés d'une épaisseur de 50 $\mu$m) d'au moins 95,0 % et de jusqu'à 100,0 %, de préférence d'au moins 98,0 % et de jusqu'à 100,0 % et encore plus préférentiellement d'au moins 99,0 % et de jusqu'à 100,0 %.

13. Film soufflé multicouche selon l'une quelconque des revendications 1 à 12 précédentes, les films ayant une résistance à l'impact d'une masse tombante (DDI) déterminée selon la méthode A de la norme ASTM D1709 sur un film soufflé multicouche de 50 $\mu$m, d'au moins 150 g et de jusqu'à 550 g, plus préférentiellement dans la plage allant de 200 à 500 g, et encore plus préférentiellement dans la plage allant de 250 à 450 g, telle que dans la plage allant de 290 à 400 g.

14. Film soufflé multicouche selon l'une quelconque des revendications 1 à 13 précédentes, les films ayant une capacité optomécanique (OMA) déterminée selon la formule :

$$OMA = \frac{Module\ de\ traction\ (MD)[MPa] * DDI(g)}{Trouble\ (50\ \mu m)[\%]}$$

déterminée sur un film soufflé multicouche de 50 $\mu$m d'au moins 30 000 [MPa*g/%] à 90 000 [MPa*g/%], de préférence dans la plage allant de 40 000 [MPa*g/%] à 80 000 [MPa*g/%].

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 201008 BB
- EP 2540496 A
- EP 2994309 A
- WO 2007085283 A1
- EP 2019081330 W
- EP 2019081323 W
- EP 3257895 A1
- EP 2019086918 W
- WO 2019081611 A
- WO 2013007650 A
- WO 201511135 A

### Non-patent literature cited in the description

- **HANS ZWEIFEL.** Plastics Additives Handbook
- **KATJA KLIMKE ; MATTHEW PARKINSON ; CHRISTIAN PIEL ; WALTER KAMINSKY HANS WOLFGANG SPIESS ; MANFRED WILHELM.** *Macromol. Chem. Phys.,* 2006, vol. 207, 382
- **MATTHEW PARKINSON ; KATJA KLIMKE ; HANS WOLFGANG SPIESS ; MANFRED WILHELM.** *Macromol. Chem. Phys.,* 2007, vol. 208, 2128
- **PATRICE CASTIGNOLLES ; ROBERT GRAF ; MATTHEW PARKINSON ; MANFRED WILHELM ; MARIANNE GABORIEAU.** *Polymer,* 2009, vol. 50, 2373
- **M. POLLARD ; K. KLIMKE ; R. GRAF ; H. W. SPIESS ; M. WILHELM ; O. SPERBER ; C. PIEL ; W. KAMINSKY.** *Macromolecules,* 2004, vol. 37, 813
- **XENIA FILIP ; CARMEN TRIPON ; CLAUDIU FILIP.** *J. Magn. Reson.,* 2005, vol. 176, 239
- **JOHN M. GRIFFIN ; CARMEN TRIPON ; AGO SAMOSON ; CLAUDIU FILIP ; STEVEN P. BROWN.** *Mag. Res. in Chem.,* 2007, vol. 45 (S1), S198
- **J. RANDALL.** *Rev. Macromol. Chem. Phys.,* 1989, vol. C29, 201
- **KLIMKE, K. ; PARKINSON, M. ; PIEL, C. ; KAMINSKY, W ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **KLIMKE, K. ; PARKINSON, M ; PIEL, C. ; KAMINSKY, W. ; SPIESS, H.W. ; WILHELM, M.** *Macromol. Chem. Phys.,* 2006, vol. 207, 382
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C ; BROWN, S.P.** *Mag. Res. in Chem.,* 2007, vol. 45 (S1), S198
- **J. RANDALL.** *Macromol. Sci., Rev. Macromol. Chem. Phys.,* 1989, vol. C29, 201
- *CHEMICAL ABSTRACTS,* 151840-68-5
- *CHEMICAL ABSTRACTS,* 6683-19-8
- *CHEMICAL ABSTRACTS,* 31570-04-4